# EUROPÄISCHE PATENTSCHRIFT

(11) **EP 3 324 026 B1**
(45) Veröffentlichungstag und Bekanntmachung des Hinweises auf die Patenterteilung: **26.05.2021**
(21) Anmeldenummer: 17199897.4
(22) Anmeldetag: 03.11.2017
(51) Int. Cl.: F02K 1/38, F02K 1/48

(54) **MISCHER FÜR EIN TRIEBWERK HERGESTELLT AUS MINDESTENS EINEM VERBUNDWERKSTOFF UND HERSTELLUNGSVERFAHREN**
MIXER FOR AN ENGINE MADE FROM AT LEAST ONE COMPOSITE MATERIAL AND MANUFACTURING METHOD
MÉLANGEUR POUR UN GROUPE MOTOPROPULSEUR FABRIQUÉ À PARTIR D'AU MOINS UN MATÉRIAU COMPOSITE ET PROCÉDÉ DE FABRICATION

(30) Priorität: 16.11.2016 DE 102016222583
(43) Veröffentlichungstag der Anmeldung: 23.05.2018
(73) Patentinhaber: Rolls-Royce Deutschland Ltd & Co KG, 15827 Blankenfelde-Mahlow (DE)
(72) Erfinder: TODOROVIC, Predrag, 15827 Blankenfelde-Mahlow (DE); KUBISCH, Thomas, 15827 Blankenfelde- Mahlow (DE); MARON, Bernhard, 15827 Blankenfelde-Mahlow (DE)
(74) Vertreter: Maikowski & Ninnemann Patentanwälte Partnerschaft mbB

(56) Entgegenhaltungen:
- EP-A1- 3 109 450
- US-A1- 2008 115 484
- US-A1- 2010 005 780
- US-B1- 8 375 699

## Beschreibung

Die Erfindung betrifft einen Mischer für ein Triebwerk nach dem Oberbegriff des Anspruchs 1 sowie ein Verfahren zur Herstellung eines Mischers.

Die Verwendung eines Mischers im Bereich des Auslasses eines Triebwerkes ist weithin bekannt, zum Beispiel aus der US 2008/115484 A1, EP 3 3032 083 A1 oder der EP 3 109 450 A1. Bei Turbofan-Triebwerken ist der Mischer dazu eingerichtet und vorgesehen, Fluidströme aus einem Primärstromkanal und einem Sekundärstromkanal des Triebwerks miteinander vor dem Ausströmen in die Umgebung miteinander zu vermischen. Über einen entsprechenden (Auslass-) Mischer (englisch "exhaust mixer") als Teil eines aus Mischsystems wird ein erster, warmer oder heißer Primärfluidstrom mit einem zweiten kühleren Sekundärfluidstrom vermischt, um den erzielbaren Schub zu erhöhen und das Triebwerksgeräusch zu reduzieren.

Aus der EP 3 032 083 A1 ist in diesem Zusammenhang beispielsweise ein Mischer für ein Turbofan-Triebwerk bekannt, der eine blütenförmige oder mäanderförmigen Kontur aufweist (in der englischen Fachsprache auch "lobed mixer" bezeichnet). Der Mischer ist hierbei vorzugsweise aus einem keramischen Faserverbundwerkstoff (englisch "ceramic matrix composite", kurz CMC) hergestellt und gestattet eine effiziente Vermischung eines im Betrieb warmen oder heißen Primärfluidstroms aus einem Primärströmungskanal des Kerntriebwerks des Turbofan-Triebwerks mit einem kühleren Sekundärfluidstrom aus einem Sekundär- oder Bypasskanal, bevor beide Fluidströme über einen Auslasskonus hinweg an einer Auslassdüse des Turbofan-Triebwerks nach außen strömen. Mischer mit vergleichbaren Geometrien sind ferner aus der US 2010/0005780 A1 und der WO 2014/007907 A2 bekannt.

In der US 2010/0005780 A1 ist für die Herstellung des Mischers aus einem Verbundwerkstoff mittels mindestens zweier Fasern enthaltender Materiallagen vorgeschlagen, den Mischer segmentweise aus Materiallagen in Form von Fasermatten herzustellen, die sich an ihren Rändern überlappen und an ihren Rändern, z.B. durch Vernähen, aneinander fixiert werden. Die Verbindung der einzelnen Materiallagen ist hierbei insbesondere im Bereich erster und zweiter Leitelemente des Mischers vorgesehen die im Fall der ersten Leitelemente mit wenigstens einem radial auswärts verlaufenden Abschnitt diffusorartig und im Falle der zweiten Leitelemente mit wenigstens einem radial einwärts verlaufenden Abschnitt düsenartig ausgebildet sind. Die Verbindung der einzelnen Materiallagen ist somit insbesondere im Bereich der einander abwechselnden Hügel und Täler respektive der einander abwechselnden Flügel und Furchen (englisch "lobes and gullies") eines eine blütenförmige oder mäanderförmigen Kontur aufweisenden Mischers vorgesehen. Hierbei sollen die Ränder der einzelnen Materiallagen gezielt reduziert sein, um in dem Verbindungsbereich der einander überlappenden Ränder mehrerer (mindestens zweier) Materiallagen die Struktur des Mischers nicht zu beeinflussen und diesen vorzugsweise mit durchgängig gleichbleibender Wandstärke auszubilden.

Nach der Lehre der US 2010/0005780 A1 werden die einzelnen Materiallagen an einem Herstellungswerkzeug angeordnet, dass eine Positivform für den herzustellenden Mischers darstellt. Hieran sind die entsprechenden Fasermatten miteinander bestimmungsgemäß verbunden und vorgeformt, bevor anschließend eine Härtung erfolgt, zum Beispiel bei trockenen Fasermatten durch Infiltration eines Matrixmaterials oder bei vorimprägnierten Fasermatten durch Pyrolyse.

Den bisher bekannten Herstellungsverfahren für die Erstellung eines Mischers für ein Triebwerk aus einem Verbundwerkstoff ist jedoch gemein, dass die Verbindung der einzelnen Materiallagen an ihren Rändern nicht gezielt zur Einstellung von Eigenschaften des Mischers ausgenutzt wird. Auch sind bisher kaum Herstellungsverfahren und Herstellungsvorrichtungen bekannt, die eine effiziente Herstellung von Mischern mit komplexer Geometrie und insbesondere blütenförmiger oder mäanderförmiger Kontur erlauben.

Es ist daher Aufgabe der Erfindung, in dieser Hinsicht eine verbesserte Lösung bereitzustellen.

Diese Aufgabe wird sowohl mit einem Mischer des Anspruchs 1 als auch mit einem Herstellungsverfahren des Anspruchs 6.

Ein erfindungsgemäße Mischer für ein Triebwerk ist zur Mischung von Fluidströmen aus einem Primärstromkanal und einem Sekundärstromkanal des Triebwerks vorgesehen und eingerichtet und weist hierfür jeweils mehrere entlang einer Umfangsrichtung des Mischers sich abwechselnde und sich entlang einer Mittelachse des Mischers erstreckende erste und zweite Leitelemente auf. Die ersten Leitelemente sind dabei mit wenigstens einem radial auswärts verlaufenden Abschnitt diffusorartig und die zweiten Leitelemente mit wenigstens einem radial einwärts verlaufenden Abschnitt düsenartig ausgebildet. Der Mischer besteht aus einem Verbundwerkstoff mit mindestens zwei separaten Materiallagen, wobei jede Materiallage einen längs der Mittelachse - zum Beispiel gerade oder gekrümmt - verlaufenden Rand aufweist. Die einzelnen Materiallagen sind beispielsweise Teil eines keramischen Faserverbundwerkstoffs (englisch "ceramic matrix composite", kurz CMC). Die mindestens zwei Materiallagen sind mit ihren Rändern entlang der Mittelachse zur wenigstens lokalen Versteifung der Struktur des Mischers einander überlappend angeordnet, und zwar in einem Bereich des Mischers, in dem die ersten und zweiten Leitelemente vorgesehen sind.

Die Anordnung der Ränder zweier Materiallagen relativ zueinander ist somit gezielt zur lokalen Beeinflussung der Steifigkeit der Struktur des Mischers genutzt. Einander überlappende Materiallagen sind hierbei gezielt zur wenigstens lokalen Versteifung, insbesondere unter Schaffung einer lokalen Aufdickung durch die sich randseitig überlappende Materiallagen, vorgesehen. Gegebenenfalls zusätzliche auf Stoß angeordnete, jeweils vorzugsweise keramische Fasern aufweisende Materiallagen können demgegenüber zur wenigstens lokalen Steifigkeitsreduzierung und damit einhergehenden gezielten Einbringung eines Bereichs höherer Flexibilität für eine elastische Verformung des Mischers in diesem Bereich im Betrieb des Triebwerks vorgesehen.

Das Vorsehen sich randseitig überlappender und auf Stoß angeordneter Materiallagen schließt hierbei insbesondere ein, dass zwei Materiallagen in einem (ersten) Bereich überlappend angeordnet sind und dieselben zwei Materiallagen oder zwei andere Materiallagen an einem anderen (zweiten) Bereich auf Stoß angeordnet sind (d.h., nach Art einer Stoßverbindung mit ihren Rändern stumpf aneinander gesetzt sind).

Die ersten (radial auswärts weisenden) Leitelemente können konvex gewölbt sein. Alternativ oder ergänzend können die zweiten (radial einwärts weisenden) Leitelemente konkav gewölbt sein. Die mindestens zwei Materiallagen sind dabei im Bereich der konvexen und/oder konkaven Wölbung entlang der Mittelachse einander überlappend oder auf Stoß angeordnet. Die einander entlang des Umfangs des Mischers abwechselnden ersten und zweiten Leitelemente können somit eine blütenförmige oder mäanderförmigen Kontur des Mischers definieren, bei der die ersten und zweiten Leitelemente nach Art der voneinander abwechselnden Hügel und Tälern respektive Flügeln und Furchen ("englisch "lobes and gullies") ausgebildet sind. Über die gezielt einander randseitig überlappenden und/oder auf Stoß aneinander angesetzten und vorzugsweise keramische Fasern aufweisenden Materiallagen ist dann insbesondere bei einem Mischer mit einer derartig komplexen dreidimensionalen Kontur bereits über die Anordnung der Ränder einzelner flächiger Materiallagen eine gezielte lokale Einstellung der Steifigkeit der Mischerstruktur erreicht. Beispielsweise wird durch auf Stoß aneinander angesetzte Materiallagen lokal eine geringere Steifigkeit vorgesehen, um im Betrieb des Triebwerks eine größere (elastische) Verformung zuzulassen. Eine lokale Versteifung durch einander überlappende Materiallagen kann alternativ oder ergänzend hierzu vorgesehen sein.

Zwei benachbarte, d.h. in Umfangsrichtung unmittelbar aufeinanderfolgende, erste und zweite Leitelemente weisen gemäß der vorgeschlagenen Lösung eine gemeinsame Seitenwand auf, die zwischen einem radial äußersten Abschnitt des ersten Leitelements und einem radial innersten Abschnitt des zweiten Leitelements verläuft. Die Seitenwand ist somit Teil sowohl des ersten als auch des zweiten Leitelements. Die mindestens zwei Materiallagen sind an dieser Seitenwand entlang der Mittelachse einander überlappend angeordnet.

Die den zwei benachbarten ersten und zweiten Leitelementen gemeinsame Seitenwand erstreckt sich in einer Ausführungsvariante entlang der Mittelachse mit sich in einer Richtung vergrößernder radialer Erstreckung. Mit anderen Worten vergrößert sich die Seitenwand in einer Längsrichtung des Mischers, die im montierten Zustand des Mischers in Richtung eines Auslass des Triebwerks und damit in Strömungsrichtung der Fluidströme weist. Die sich radial vergrößernde Erstreckung der Seitenwand ergibt sich dabei durch die radial ein- und auswärts weisenden ersten und zweiten Leitelemente.

Gemäß der vorgeschlagenen Lösung weisen sich längs der Mittelachse erschreckende Randkanten der sich überlappenden Materiallagen jeweils einen Verlauf auf, der - bezogen auf die Mittelachse - zusätzlich zu einer axialen Richtungskomponente sowohl eine Richtungskomponente in Umfangsrichtung als auch eine Richtungskomponente in radialer Richtung umfasst. Die Randkanten der mindestens sich zwei überlappenden Materiallagen verlaufen somit im Dreidimensionalen, sodass bezogen auf eine Längserstreckungsrichtung des Mischers entlang der Mittelachse ein vorderer Startpunkt der Randkante zu wenigstens einem weiteren Punkt der Randkante in drei Raumrichtungen versetzt ist. Der im montierten Zustand des Mischers stromab liegende weitere Punkt der Randkante ist folglich in drei Raumrichtungen bezüglich des stromauf liegenden Startpunktes der Randkante versetzt. Die sich überlappenden Randkanten laufen in dieser Variante somit nicht geradlinig in axialer Richtung, sondern sind zum Beispiel als Polynomzug ausgeführt und verlaufen an dem Mischer bezüglich wenigstens zweier zueinander senkrechter Raumachsen gekrümmt. Eine durch die sich überlappenden Ränder der mindestens zwei Materiallagen definierte Verdickung respektive Versteifung der Mischerstruktur folgt somit einem vergleichsweise komplexen Verlauf und kann derart insbesondere an einem Bereich der ersten und zweiten Leitelemente entlang gelegt werden, der im Betrieb des Triebwerks stärker mechanisch belastet ist und/oder an dem eventuelle Aufdickungen der Außen- und/oder Innenkontur des Mischers zu einer allenfalls geringen Beeinflussung der ersten und zweiten Fluidströme an dem Mischer führt.

Im Rahmen der vorgeschlagenen Lösung ist hierbei ferner vorgesehen, dass durch die sich überlappenden Materiallagen an der an sich flachen gemeinsamen Seitenwand in etwa mittig eine lokale, sich in axialer Richtung erstreckende Verdickung gebildet ist, die die Struktur des Mischers lokal versteift. Derart ist die Mischerstruktur lokal und ohne störenden Einfluss auf über den Mischer geleitete Fluidströmungen versteift.

In einem Ausführungsbeispiel ist zusätzlich zu den mindestens zwei Materiallagen, die einander überlappend angeordnet sind, wenigstens eine weitere Materiallage vorgesehen, die sich in Umfangsrichtung über den Bereich hinweg erstreckt, in dem Ränder der mindestens zwei Materiallagen aufeinander liegen (bei überlappend angeordneten Materiallagen) oder aneinander angrenzen (bei auf Stoß aneinander angeordneten Materiallagen). Die wenigstens eine weitere Materiallage erstreckt sich somit in Umfangsrichtung über den Bereich einander überlappender oder aneinander angrenzender Ränder zweier anderer Materiallagen hinweg und überdeckt diesen Bereich entlang der Mittelachse teilweise oder vollständig. Der Mischer ist folglich zum Beispiel in dem Bereich, in dem zwei Materiallagen einander überlappend angeordnet sind, wenigstens dreilagig ausgeführt und in dem Bereich, in dem zwei Materiallagen auf Stoß angeordnet sind, wenigstens zweilagig.

Wenigstens eine Materiallage ist in einem Ausführungsbeispiel durch eine Fasermatte gebildet, die sich entlang der Umfangsrichtung über wenigstens einen radial äußersten Abschnitt des ersten Leitelements und/oder über wenigstens einen radial innersten Abschnitt des zweiten Leitelements erstreckt. An dem Mischer ist folglich ein Segment des Mischers, das ein erstes Leitelement und/oder ein zweites Leitelement teilweise oder vollständig in Umfangsrichtung umfasst, durch wenigstens eine Fasermatte (mit)gebildet. Eine solche Fasermatte weist beispielsweise Keramik-Filamente auf.

In einer Weiterbildung erstreckt sich die Fasermatte entlang der Umfangsrichtung über genau einen radial äußersten Abschnitt des ersten Leitelements oder über genau einen radial innersten Abschnitt des zweiten Leitelements. Eine solche Fasermatte definiert somit beispielsweise bei einem Mischer mit blütenförmiger oder mäanderförmiger Kontur genau einen einzelnen Hügel oder ein einzelnes Tal einschließlich einer Seitenwand für das hieran unmittelbar angrenzende Tal oder den unmittelbar hieran angrenzenden Hügel des Mischers.

Grundsätzlich kann sich die Fasermatte in dem Bereich des Mischers, in dem die Fasermatte vorgesehen ist, über die gesamte Länge des Mischers in einer parallel zur Mittelachse verlaufenden Längsrichtung erstrecken. Es wird mit anderen Worten keine Fasermatte in axialer Richtung vor oder hinter der Fasermatte zur Bildung der Mischerstruktur vorgesehen. Die Fasermatte definiert somit über die gesamte axiale Länge ein Segment des Mischers (mit).

Eine Materiallage des Mischers kann grundsätzlich ein Teil eines keramischen Verbundwerkstoffs sein, wobei Fasern und Matrix des Verbundwerkstoffs einen keramischen Werkstoff, insbesondere Kohlenstoff aufweisen können. Die Materiallage kann dementsprechend SiC-Fasern aufweisen ebenso wie keramische Filamentmaterialien. Die Faser oder Filamente können sowohl sortengleich als auch sortengemischt sein. Beispielsweise können Glas- und Kohlenstofffasern kombiniert sein. Eine Harz-Matrix eines mittels der mindestens zwei Materiallagen gebildeten Teils des Mischers kann durch Pyrolyse konvertiert und durch weiteren Eintrag von Harzmaterial (Polymerflltration) und erneute Pyrolyse verdichtet sein. Insbesondere hierfür können anorganische Fasermaterialien einschließlich Keramik-Filamente aus (z.B. pyrolytischem) Kohlenstoff, Graphit, Glas und Aramid verwendet sein. Als Keramik-Filamente sind ferner z.B. (pyrolytischer) Kohlenstoff, Siliciumcarbid, Aluminiumoxid, Siliciumnitrid, Mullit, Bor, Wolfram, Borcarbid, Bornitrid und Zirconium einsetzbar.

Ein weiterer Aspekt der gegenständlichen Erfindung ist ein Verfahren zur Herstellung eines Mischers aus einem Verbundwerkstoff mittels mindestens zweier, jeweils vorzugsweise keramische Fasern aufweisender Materiallagen. Die Materiallagen sind hierbei üblicherweise flexibel ausgeführt, sodass sie an einem Herstellungswerkzeug, das als Positiv- oder Negativform für den herzustellenden Mischer dient, angeordnet und vorgeformt werden können.

Im Zuge eines erfindungsgemäßen Verfahrens ist vorgesehen, dass die mindestens zweite Materiallagen zur Bildung der ersten und zweiten Leitelemente, die sich entlang einer Umfangsrichtung abwechseln und einen radial auswärts weisenden Abschnitt respektive einen radial einwärts weisenden Abschnitt aufweisen, mit ihren Rändern entlang der Mittelachse zur wenigstens lokalen Versteifung der Struktur des Mischers einander überlappend angeordnet werden.

Mit einem erfindungsgemäßen Herstellungsverfahren ist somit ein erfindungsgemäßer Mischer herstellbar. Dementsprechend gelten vorstehend und nachstehend erläuterte Vorteile und Merkmale für Ausführungsvarianten eines erfindungsgemäßen Mischers auch für Ausführungsvarianten eines erfindungsgemäßen Herstellungsverfahrens und umgekehrt.

In einer Ausführungsvariante werden mindestens zwei jeweils flexible Materiallagen an einem Herstellungswerkzeug angeordnet, das eine Kontur des Mischers vorgibt. Hierbei werden die Materiallagen an diesem Herstellungswerkzeug einer Härtung unterworfen. Unter einer Härtung wird hierbei insbesondere ein gegebenenfalls mehrere Schritte umfassendes (Aus-) Härten oder ein entsprechender (Aus-) Härtungsprozess verstanden, der beispielsweise eine Temperaturbehandlung und/oder die Infiltration eines Matrixmaterials des Verbundwerkstoffs umfassen kann. Teil der Härtung kann beispielsweise ein Infusionsverfahren (wie zum Beispiel VAR® - "Vacuum Assisted Process", oder ein VARI - Vacuum Assisted Resin Injection), ein Autoklavenverfahren oder ein Injektionsverfahren, insbesondere ein Harzinjektionsverfahren (wie zum Beispiel ein RTM-Verfahren, "RTM" für "resin transfer moulding") sein.

Das Herstellungswerkzeug kann eine Positivform umfassen. Hierbei erstreckt sich das Herstellungswerkzeug entlang einer der mit der Mittelachse des Mischers zusammenfallenden Längsachse und weist radial nach außen vorstehende Radialarme für die Definition der ersten (und zweiten) Leitelemente des Mischers auf. Die mindestens zwei Materiallagen werden hierbei dann an einer Außenkontur des Herstellungswerkzeugs angeordnet.

Alternativ oder ergänzend kann eine Negativform vorgesehen sein. Ein entsprechendes Herstellungswerkzeug erstreckt sich dann ebenfalls entlang einer mit der Mittelachse des Mischers zusammenfallenden Längsachse. Hierbei umrandet das Herstellungswerkzeug jedoch einen Hohlraum kreisringförmig, in den sich radial nach innen erstreckende Radialarme des Herstellungswerkzeugs für die Definition der zweiten (und ersten) Leitelemente des Mischers erstrecken. Die mindestens zwei Materiallagen werden hierbei dann an einer Innenkontur eines solchen Herstellungswerkzeugs angeordnet. Für die Umsetzung eines Injektionsverfahrens können selbstverständlich auch zwei Herstellungswerkzeuge als Positivform und hiermit korrespondierende Negativform miteinander kombiniert werden, wobei in einem Zwischenraum, der von beiden Werkzeugen definiert ist, die Materiallagen angeordnet sind, bevor die entsprechende Matrix zur Härtung zwischen die Faser, z.B. durch Infiltration, eingebracht wird.

Zur leichteren Entformung des Mischers von dem Herstellungswerkzeug kann das Herstellungswerkzeug an den Radialarmen und/oder an einem Grundkörper des Herstellungswerkzeugs, an dem die Radialarme vorgesehen sind, Entformungsschrägen aufweisen. Entformungsschrägen im Bereich der Radialarme können einen bedingen, dass sich in Umfangsrichtung gegenüberliegende Seitenwände eines Leitelements unter einem Winkel und damit nicht parallel zueinander verlaufen.

Ein paralleler Verlauf sich gegenüberliegender und jeweils axial erstreckender Seitenwände kann dabei jedoch mit Blick auf die Aerodynamik zu bevorzugen sein. Vor diesem Hintergrund ist in einer Variante ein Herstellungswerkzeug für die Herstellung eines Mischers mit parallel zueinander verlaufenden und sich in axialer Richtung erstreckende Seitenwänden der ersten und zweiten Leitelemente vorgeschlagen. Hierbei kann das Herstellungswerkzeug wenigstens einen Radialarm aufweisen, der an dem Grundkörper über einen Formschluss gehalten und entlang der Längsachse relativ zu dem Grundkörper verschieblich ist, und/oder das Herstellungswerkzeug weist ein Kanalsystem zur gezielten wenigstens lokalen Erwärmung und/oder Kühlung des Herstellungswerkzeugs mittels eines Fluids auf, sodass eine temperaturbedingte Ausdehnung oder Schrumpfung des Herstellungswerkzeug gesteuert werden kann, um das Entformen zu erleichtern. Beispielsweise kann wenigstens die radiale Ausdehnung der Radialarme während des Aushärtens des Mischers oder während eines Entformens über das in dem Kanalsystem geführte Fluid gesteuert werden, sodass diese für das Entformen (stärker) abgekühlt und damit geschrumpft und der Mischer von den Radialarmen entfernt werden kann. Teil des Kanalsystems sind in einer Variante mehrfach verzweigte Fluidkanäle im Inneren des Herstellungswerkzeugs. Besonders effektiv ist die Verwendung eines Kanalsystems bei einem Herstellungswerkzeug, dessen Radialarme aus einem Material mit einem vergleichsweise großen Wärmeausdehnungskoeffizienten bestehen.

Neben der leichteren Entformung kann die gesteuerte Temperierung des Herstellungswerkzeugs über das Kanalsystem auch zur gezielten Steuerung der Aushärtung bzw., beim Infiltrationsverfahren, der Steuerung der Harzfließfront genutzt werden. Das Kanalsystem kann somit einerseits zur Erwärmung und/oder Kühlung des Herstellungswerkzeugs eingerichtet und vorgesehen sein, um eine temperaturbedingte Ausdehnung oder Schrumpfung des Herstellungswerkzeugs für das das Entformen zu erleichtern. Andererseits kann das Kanalsystem zur Erwärmung des Herstellungswerkzeugs für die gezielte Steuerung eines Härtungsprozesses der über das Herstellungswerkzeug zu formenden Mischerstruktur, insbesondere beim Infiltrationsverfahren für die Steuerung einer Harzfließfront, eingerichtet und vorgesehen sein.

Die mindestens zwei für die Herstellung des Mischers verwendeten Materiallagen können durch vorimprägnierte Fasermatten (mit anderen Worten durch sogenannte "PrePregs", d.h. vorimprägnierte textile Faser-Matrixhalbzeuge) gebildet werden. Alternativ können die mindestens zwei Materiallagen durch Fasermatten gebildet werden, die nach der Anordnung an einem die Kontur des Mischers vorgebenden Herstellungswerkzeug imprägniert werden. In beiden Fällen erfolgt erfindungsgemäß die Anordnung der Fasermatten derart, dass sich deren Ränder in definierten Bereichen zur Steifigkeitsbeeinflussung überlappen oder auf Stoß aneinander gesetzt werden, bevor eine Härtung durchgeführt und damit der Mischer aus einem Verbundwerkstoff einstückig hergestellt wird.

In einer Ausführungsvariante ist zur Kostenreduktion bei der Herstellung des Mischers vorgesehen, dass die mindestens zwei Materiallagen aus einer Materialfläche ausgeschnitten werden, wobei
1. die mindestens zwei Materiallagen zur Bildung wenigstens oder lediglich genau eines Segments des Mischers vorgesehen sind,
2. die Geometrien der mindestens zwei Materiallagen automatisiert, d.h. computergestützt unter Nutzung wenigstens eines Algorithmus, unter Vorgabe wenigstens eines Designparameters bestimmt werden, und
3. die mindestens zwei Materiallagen mit den automatisiert bestimmten Geometrien aus der Materialfläche derart geschnitten werden, dass ein Minimum an Verschnitt entsteht, wobei eine hierfür erforderliche Vorgabe einer Anordnung von Schnittlinien für die mindestens zwei Materialagen an der Materialfläche ebenfalls automatisiert erfolgt.

Die Materialfläche wird zum Beispiel durch Abwicklung einer aufgerollten Fasermatte gewonnen. Bei dem wenigstens einen Designparameter, unter dessen Vorgabe die Geometrien der mindestens zwei Materiallagen automatisiert bestimmt werden, kann es sich beispielsweise um die Vorgabe vordefinierter Überlappungsbereiche, an denen sich die Ränder der Materiallagen überlappen sollen, und/oder um die Vorgabe vordefinierter Stoßbereiche, an denen die Ränder der Materiallagen an dem Mischer auf Stoß angeordnet werden sollen, handeln. Softwareseitig kann somit vorgegeben sein, für eine gewünschte Mischerkontur an bestimmten definierten Stellen und Bereichen Versteifungen durch sich überlappende Materiallagenränder und/oder Reduzierungen der Steifigkeit durch stumpf aneinandergesetzte Materiallagenränder vorzusehen und hierfür ein Segment des Mischers aus durch Fasermatten gebildete Materiallagen herzustellen, die hierfür aufeinander abgestimmte Geometrien aufweisen. Diese Geometrien werden computergestützt ermittelt und dann im Anschluss, ebenfalls computergestützt, virtuell derart auf einer gegebenen und beispielsweise rechteckförmigen Materialfläche angeordnet, sodass ein Minimum an Verschnitt entsteht, wenn die entsprechenden Materiallagen aus der Materialfläche herausgeschnitten werden.

Für die Durchführung eines erfindungsgemäßen Herstellungsverfahrens kann eine spezifische Vorrichtung zur Herstellung eines Mischers für ein Triebwerk vorgesehen sei. Der hierbei mittels der Vorrichtung herzustellende Mischer weist beispielsweise eine blütenförmige oder mäanderförmige Kontur auf, mit sich als Hügeln und Tälern (englisch "lobes and gullies") darstellenden ersten und zweiten Leitelementen für die Mischung von ersten und zweiten Fluidströmen im Bereich des Auslasses eines Triebwerks.

Die Vorrichtung umfasst hierbei wenigstens ein Herstellungswerkzeug für den Mischer, wobei über eine (Außen- und/oder Innen-) Kontur des Herstellungswerkzeugs mehrere entlang einer Umfangsrichtung sich abwechselnde und sich entlang einer Mittelachse erstreckende, erste und zweite Leitelemente des Mischers derart vorgegeben werden, dass die ersten Leitelemente mit wenigstens einem radial auswärts verlaufenden Abschnitt diffusorartig und die zweiten Leitelemente mit wenigstens einem radial einwärts verlaufenden Abschnitt düsenartig an dem Herstellungswerkzeug ausgebildet werden.

Das Herstellungswerkzeug weist für die Vorgabe der ersten und zweiten Leitelemente einen sich entlang einer mit der Mittelachse des Mischer zusammenfallenden Längsachse erstreckenden Grundkörper auf, an dem mehrere entlang einer Umfangsrichtung um die Längsachse zueinander beabstandete und jeweils radial vorstehende Radialarme für die Definition der Konturen der ersten und zweiten Leitelemente vorgesehen sind. Das als Negativform oder Positivform für den Mischer ausgestaltete Herstellungswerkzeug, an dem beispielsweise trockene oder vorimprägnierte Fasermatten für einen aus einem keramischen Faserverbundwerkstoff herzustellenden Mischer angeordnet werden, weist zur leichteren Entformbarkeit des Mischers von dem Herstellungswerkzeug wenigstens einen Radialarm auf, der an dem Grundkörper über einen Formschluss gehalten und entlang der Längsachse relativ zu dem Grundkörper verschieblich ist.

Für die formschlüssige Verbindung kann der Grundkörper beispielsweise eine Längsnut aufweisen und der Radialarm einen schwalbenschwanzförmigen oder im Querschnitt T-förmigen Befestigungssteg.

Indem gezielt wenigstens einer der Radialarme oder alle Radialarme des Herstellungswerkzeugs an dem Grundkörper axial , d.h., in vornehmlich axialer Richtung, verschieblich gehalten sind, kann die Entformung des Mischer nach der Härtung erheblich vereinfacht werden. Dies ist insbesondere bei einem CMC-Mischer von Vorteil, der einstückig aus einem keramischen Faserverbundwerksstoff hergestellt sein und eine blütenförmige oder mäanderförmige Kontur für die Mischung der ersten und zweiten Flutströme aus dem Primär- und Sekundärstromkanal eines Triebwerks aufweisen soll.

In einer hierauf basierenden Weiterbildung ist vorgesehen, dass sich der Grundkörper in einer Längsrichtung entlang der Längsachse verjüngt, während sich die an dem Grundkörper vorgesehenen Radialarme jeweils entgegengesetzt zu dieser Längsrichtung verjüngen. Mit anderen Worten verringert sich in dieser Variante eine radiale Ausdehnung des Grundkörpers in Längsrichtung, während sich eine radiale Ausdehnung jedes Radialarmes an dem Grundkörper in Längsrichtung vergrößert, um hierüber die diffusorartige Ausgestaltung der ersten Leitelemente und die gleichzeitige düsenartige Ausgestaltung der zweiten Leitelemente an dem Mischer über das Herstellungswerkzeug abzubilden. Insbesondere hierdurch ist die Entformung entsprechend erschwert, wenn eine Härtung von Fasern aufweisenden Materiallagen für die Wandungen des Mischers an dem Herstellungswerkzeug erfolgen soll. Die entsprechende Geometrie und Kontur eines solchen Mischers verhindern eine einfache Trennung des Mischers von dem formgebenden Herstellungswerkzeug. Durch einen gezielt verschieblich an dem Grundkörper gehaltenen Radialarm oder mehrere verschieblich gehaltene Radialarme, kann dieser Problematik effektiv begegnet werden. Der Mischer kann derart dennoch einstückig aus einem Verbundwerkstoff kostengünstig hergestellt werden. In einem Ausführungsbeispiel ist hierbei beispielsweise jeder Radialarm entlang der Längsachse in Längsrichtung aus einer längs erstreckten Befestigungsnut des Grundkörpers ausschiebbar.

In einer Variante ist das Herstellungswerkzeug für die Herstellung eines Mischers mit parallel zueinander verlaufenden und sich in axialer Richtung erstreckende Seitenwänden der ersten und zweiten Leitelemente vorgesehen. Hierbei kann das Herstellungswerkzeug ein Kanalsystem zur gezielten wenigstens lokalen Erwärmung und/oder Kühlung des Herstellungswerkzeugs mittels eines Fluids (z.B. Wasser, Öl, etc.) aufweisen, sodass eine temperaturbedingte Ausdehnung oder Schrumpfung des Herstellungswerkzeug gesteuert werden kann, um das Entformen zu erleichtern. Beispielsweise kann wenigstens die radiale Ausdehnung der Radialarme während des Aushärtens des Mischers oder während eines Entformens über das in dem Kanalsystem geführte Fluid gesteuert werden, sodass diese für das Entformen (stärker) abgekühlt und damit geschrumpft und der Mischer von den Radialarmen entfernt werden kann. Teil des Kanalsystems sind in einer Variante mehrfach verzweigte Fluidkanäle im Inneren des Herstellungswerkzeugs. Besonders effektiv ist die Verwendung eines Kanalsystems bei einem Herstellungswerkzeug, dessen Radialarme aus einem Material mit einem vergleichsweise großen Wärmeausdehnungskoeffizienten bestehen.

Die Entformung des Mischers von dem Herstellungswerkzeug kann alternativ oder ergänzend erleichtert sein, indem der Grundkörper und/oder wenigstens einer der Radialarme des Herstellungswerkzeugs aus einem Material hergestellt ist, das einen höheren Wärmeausdehnungskoeffizienten aufweist als Edelstahl, z.B. Aluminium. Die Verwendung eines Materials mit einem vergleichsweise hohen Wärmeausdehnungskoeffizienten (zum Beispiel größer als 17x10⁻⁶K) führt dazu, dass der Grundkörper und/oder der jeweilige Radialarm sich bei der Härtung vergleichsweise stark, insbesondere radial ausdehnt. Nach einer Abkühlung des Herstellungswerkzeugs ist das jeweilige Bauteil wieder erheblich geschrumpft und damit das Entfernen des Mischers von dem Herstellungswerkzeug erleichtert, insbesondere parallel verlaufenden Seitenwänden.

Teil der erfindungsgemäßen Lösung ist weiterhin ein Triebwerk, insbesondere ein Turbofan-Triebwerk, mit einem erfindungsgemäßen Mischer.

Die beigefügten Figuren veranschaulichen exemplarisch mögliche Ausführungsvarianten der erfindungsgemäßen Lösung.

Hierbei zeigen:
- Figur 1: eine perspektivische Ansicht eine Ausführungsvariante eines nicht-erfindungsgemäßen Mischer mit blütenförmiger oder mäanderförmiger Kontur;
- Figur 2: ausschnittsweise einen Querschnitt des Mischers der Figur 1 unter Darstellung einzelner auf Stoß angeordneter Materiallagen;
- Figuren 2A-2B: vergrößerte Ausschnitte der Schnittdarstellung der Figur 2;
- Figur 3: in perspektivischer Ansicht ein aus mehreren einzelnen Materiallagen aufgebautes Segment des Mischers der Figur 1, mit axial auf Stoß angeordneten Materiallagen;
- Figur 4: eine Variante des Segments der Figur 3 mit alternativer randseitiger Anordnung einzelner Materiallagen;
- Figur 5: in mit der Figur 2 übereinstimmender Ansicht eine Schnittdarstellung mit einem alternativen, erfindungsgemäßen Aufbau der Materiallagen;
- Figur 5A: eine schematische Schnittdarstellung der Materiallagen der Figur 5 in einem aufgefalteten Zustand und in einer alternativen Schichtung;
- Figur 6: in perspektivischer Ansicht ein Segment des Mischers mit zwei sich axial entlang eines Hügels ("lobe") des Mischers und randseitig überlappenden Materiallagen;
- Figur 7: in perspektivischer Darstellung ein Segment des Mischers mit vier sich jeweils paarweise axial entlang eines Tals ("gully") des Mischers und randseitig überlappenden Materiallagen;
- Figur 8: ausschnittsweise eine Querschnittsdarstellung eines Mischers mit drei Materiallagen entsprechend einer weiteren Ausführungsvariante;
- Figur 9: ausschnittsweise eine Schnittdarstellung eines Herstellungswerkzeugs für die Herstellung eines Mischers entsprechend der Figur 8;
- Figur 10: ein Teilstück des Mischers der Figur 1 mit unterschiedlichen Mischersegmenten aus einander randseitig entlang eines Polynomzuges überlappenden Materiallagen;
- Figuren 10A-10B: unterschiedlich aufgebaute Mischersegmente für das Teilstück der Figur 10;
- Figur 11: ausschnittsweise und schematisch eine Schnittdarstellung des Teilstücks der Figur 10;
- Figur 12: ausschnittsweise und in perspektivischer Ansicht ein Segment des Mischers mit Veranschaulichung von Bereichen unterschiedlicher Steifigkeit;
- Figuren 13A bis 13E: in unterschiedlichen Ansichten eine Ausführungsvariante eines erfindungsgemäßen Herstellungswerkzeugs als Positivform für einen herzustellenden Mischer der Figur 1;
- Figuren 14 bis 19: Veranschaulichung einer Variante eines erfindungsgemäßen Verfahrens zur Herstellung eines Mischers entsprechend der Figur 1, bei dem mehrere Materiallagen für ein einzelnes Segment des Mischers computergestützt und automatisiert aus einer Materialfläche einer Faserrolle zur nachfolgenden Anordnung an einem Herstellungswerkzeug ausgeschnitten werden;
- Figuren 20 bis 23: schematische Darstellung möglicher Verfahren zur Durchführung einer Härtung bei Herstellung des Mischers;
- Figuren 24 bis 24A: schematische Veranschaulichung einer Variante eines erfindungsgemäßen Herstellungsverfahrens unter Verwendung einer Positivform entsprechend der Figuren 13A bis 13E;
- Figuren 25 bis 25A: schematische Veranschaulichung einer Variante eines erfindungsgemäßen Herstellungsverfahrens unter Verwendung eines Herstellungswerkzeugs als Negativform für den Mischer;
- Figuren 26 bis 26A: schematische Veranschaulichung einer weiteren Ausführungsvariante eines erfindungsgemäßen Herstellungsverfahrens, das als Teil der Härtung ein Injektionsverfahren nutzt;
- Figur 27: eine Querschnittsansicht eines erfindungsgemäßen Turbofan-Triebwerks mit einem Mischer im Bereich eines Auslasses des Turbofan-Triebwerks;
- Figur 28: einen Ausschnitt eines Herstellungswerkzeugs mit einem hierin integrierten Kanalsystem.

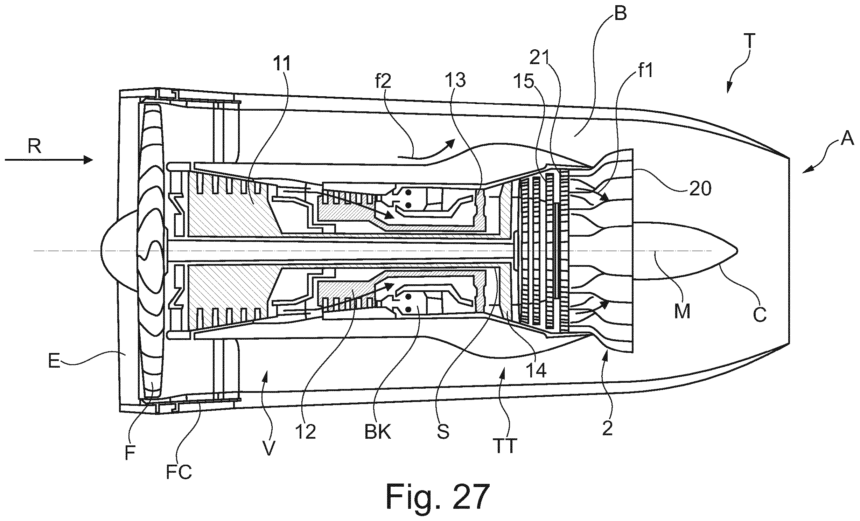

Die Figur 27 veranschaulicht schematisch und in Schnittdarstellung ein (Turbofan-) Triebwerk T, bei dem die einzelnen Triebwerkskomponenten entlang einer Rotationsachse oder Mittelachse M hintereinander angeordnet sind. An einem Einlass oder Intake E des Triebwerks T wird Luft entlang einer Eintrittsrichtung R mittels eines Fans F angesaugt. Dieser in einem Fangehäuse FC angeordnete Fan F wird über eine Rotorwelle S angetrieben, die von einer Turbine TT des Triebwerks T in Drehung versetzt wird. Die Turbine TT schließt sich hierbei an einen Verdichter V an, der beispielsweise einen Niederdruckverdichter 11 und einen Hochdruckverdichter 12 aufweist, sowie gegebenenfalls noch einen Mitteldruckverdichter. Der Fan F führt einerseits dem Verdichter V Luft zu sowie andererseits einem Sekundärstromkanal oder Bypasskanal B zur Erzeugung des Schubs. Der Bypasskanal B verläuft hierbei um ein den Verdichter V und die Turbine TT umfassendes Kerntriebwerk, das einen Primärstromkanal für die durch den Fan F dem Kerntriebwerk zugeführte Luft umfasst.

Die über den Verdichter V in den Primärstromkanal geförderte Luft gelangt in einen Brennkammerabschnitt BK des Kerntriebwerks, in dem die Antriebsenergie zum Antreiben der Turbine TT erzeugt wird. Die Turbine TT weist hierfür eine Hochdruckturbine 13, eine Mitteldruckturbine 14 und einen Niederdruckturbine 15 auf. Die Turbine TT treibt dabei über die bei der Verbrennung frei werdende Energie die Rotorwelle S und damit den Fan F an, um über die die in den Bypasskanal B geförderte Luft den erforderlichen Schub zu erzeugen. Sowohl die Luft aus dem Bypasskanal B als auch die Abgase aus dem Primärstromkanal des Kerntriebwerks strömen über einen Auslass A am Ende des Triebwerks T aus. Der Auslass A weist hierbei üblicherweise eine Schubdüse mit einem zentral angeordneten Austrittskonus C auf.

Insbesondere zur Lärmminderung ist im Bereich des Auslasses A ein Mischer 20 als Teil einer Mischerbaugruppe 2 vorgesehen, die im Bereich einer Schnittstelle 21 an Triebwerksbauteilen des Kerntriebwerks festgelegt ist. Über diese Mischerbaugruppe 2 und deren Mischer 20 werden ein erster Fluidstrom f1 aus dem Primärstromkanal, der das Kerntriebwerk hinter der Niederdruckturbine 15 verlässt, und ein zweiter Fluidstrom f2 aus dem Bypasskanal B vermischt. Hierfür werden über eine blütenförmige oder mäanderförmige Kontur des Mischers 20 Teile der erste (Primär-) Fluidstrom f1 aus dem Kerntriebwerk abwechselnd nach außen und der zweite (Sekundär-) Fluidstrom f2 aus dem Bypasskanal B nach innen gelenkt. Hierdurch werden segmentweise heiße und kalte Strömungszonen erzeugt und es wird eine Vermischung der beiden Fluidströme f1 und f2 erreicht. Durch die bei der Vermischung auftretenden Verwirbelungen wird niederfrequenter Lärm reduziert und höherfrequenter Lärm verstärkt, um im Ergebnis das hörbare Lärmniveau abzusenken.

Der Mischer 20 ist vorliegend vorzugsweise aus einem Faserverbundwerkstoff, insbesondere einem keramischen Faserverbundwerkstoff und damit z.B. als CMC-Mischer hergestellt. Der Mischer 20 weist in den nachfolgend noch näher erläuterten Ausführungsvarianten Leitelemente 210, 220 auf, die die mäanderförmige Kontur des Mischers 20 definieren und nach Art von einander abwechselnden Hügeln und Tälern um eine Mischeröffnung O ausgebildet sind (englisch: "lobes and gullies"). Über diese Leitelemente 210, 220 werden die ersten und zweiten Fluidströme f1 und f2 aus dem Primärstromkanal des Kerntriebwerks und dem Bypasskanal B abwechselnd nach außen und nach innen gelenkt, um die gewünschte Vermischung der Fluidströme f1 und f2 zu erreichen.

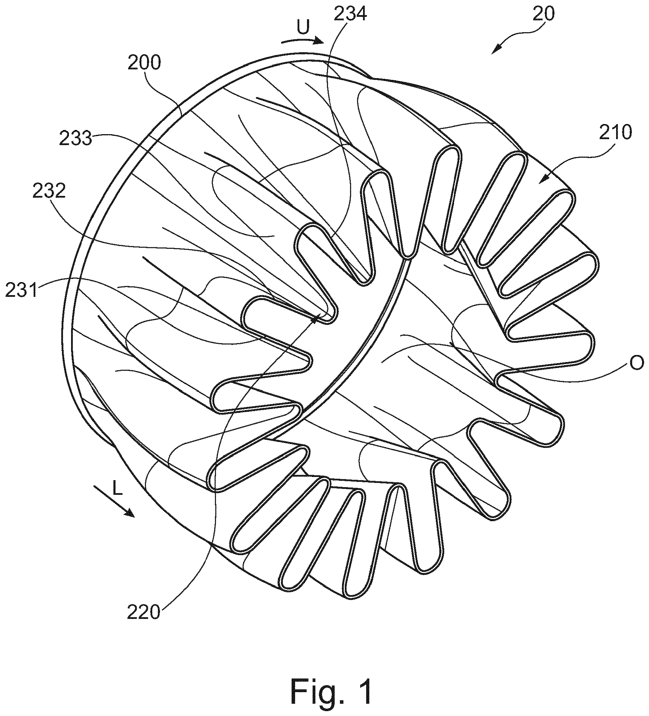

Die Figur 1 zeigt in perspektivischer Einzeldarstellung den Mischer 20. Dieser erstreckt sich in einer mit der Mittelachse M zusammenfallenden Längsachse in einer Längsrichtung L, die im montierten Zustand des Mischers 20 in Richtung des Auslass A und damit in Strömungsrichtung der Fluidströmung f1 und f2 weist. Ausgehend von einem vorderen Mischerrand 200, über den die Festlegung des Mischers 20 an der Schnittstelle 21 erfolgt, erstrecken sich in Längsrichtung L die unterschiedlichen Leitelemente 210 und 220 des Mischers 20. Diese Leitelemente 210 und 220 sind entlang einer Umfangsrichtung U einander abwechselnd angeordnet und sind abwechselnd konvex (im Fall der ersten Leitelemente 210) und konkav (im Fall der zweiten Leitelemente 220) gewölbt.

Die ersten Leitelemente 210 sind dabei jeweils radial auswärts weisend und mithin diffusorartig ausgestaltet, während die zweiten Leitelemente 220 radial einwärts weisend und mithin düsenartig ausgebildet sind. Dementsprechend wird der Fluidstrom f1 aus dem Kerntriebwerk über die ersten Leitelemente 210 radial nach außen gelenkt, während der Fluidstrom f2 aus dem Bypasskanal B über die zweiten Leitelemente 210 radial nach innen gelenkt wird, wenn der Mischer 20 bestimmungsgemäß an dem Triebwerk T montiert ist.

Jedes erste Leitelement 210 hat mit einem benachbarten zweiten Leitelement 220 je eine Seitenwandung 231, 232, 233 oder 234 gemeinsam. Eine Seitenwand 231-234 verläuft somit zwischen einem radial äußersten Abschnitt eines ersten Leitelements 210, d.h. bis zu einer konvexen Außenwölbung 2100 des ersten Leitelements 210, und einem radial innersten Abschnitt eines zweiten Leitelements 220, d.h., bis zu einer konkaven Innenwölbung 2200 des zweiten Leitelements. Durch die radial konvergierenden zweiten Leitelemente 220 und axial divergierenden ersten Leitelemente 210 vergrößert sich die radiale Erstreckung jeder Seitenwand 231-234 (bezüglich der Längsrichtung L des Mischers 20) ausgehend von dem Mischerrand 200 in Richtung des auslassseitigen Endes des Mischers 20.

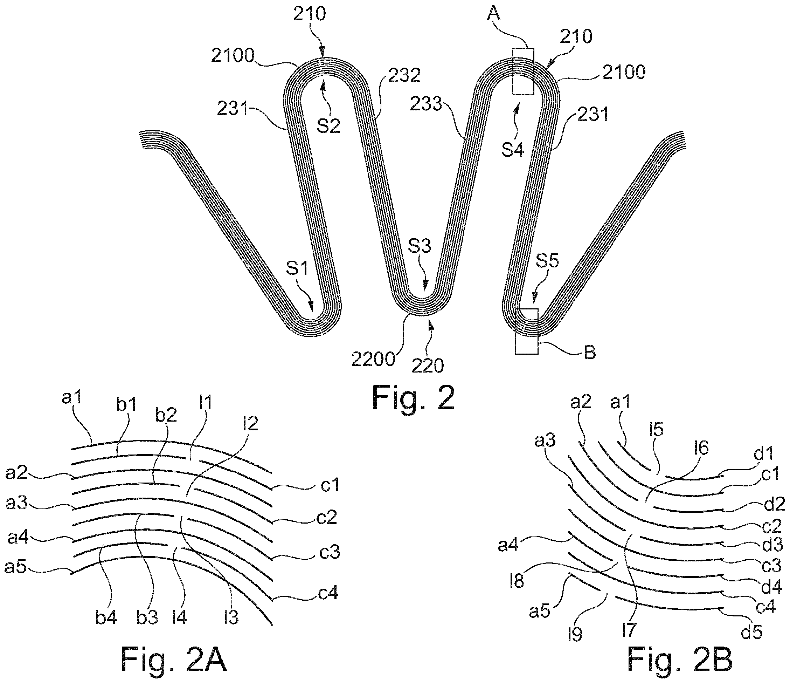

Der aus einem Faserverbundwerkstoff hergestellte Mischer 20 ist vorliegend aus mehreren Fasermatten mit Keramik-Filamenten und einer ggf. ebenfalls Keramik aufweisenden Matrix als CMC-Bauteil ausgebildet. Der Mischer 20 ist mehrlagig und in einer ersten Ausführungsvariante z.B. aus unterschiedlichen Materiallagen a1 bis a5, b1 bis b4, c1 bis c4 und d1 bis d5 aufgebaut. Dies ist insbesondere anhand der Figuren 2, 2A und 2B für die erste Ausführungsvariante veranschaulicht.

Hierbei sind mehrere einzelne aus Fasermatten gebildete Materiallagen a1 bis a5; d1 bis d 5 und b1 bis b4; c1 bis c4 an ihren in Umfangsrichtung U liegenden Rändern in axialer Richtung paarweise auf Stoß angeordnet. Bei auf Stoß angeordneten und damit stumpf aneinandergesetzten Materiallagen a1 bis a5 und d1 bis d5 sowie b1 bis b4 und c1 bis c4 liegt zwischen jedem Paar auf Stoß angeordneter Materiallagen eine ggf. nur wenige µm breite Lücke I1 bis I9 vor. In einem Stoßbereich S1-S5 der jeweiligen Lücken I1 bis I9 ist damit gezielt eine reduzierte Steifigkeit vorgesehen, die eine größere elastische Verformbarkeit der Mischerstruktur mit sich bringt. Über die Stoßbereiche S1 bis S5 an den konvexen Außenwölbungen 2100 und den konkaven Innenwölbungen 2200 ist über die Anordnung der Materiallagen a1 bis d5 folglich eine gezielte Steifigkeitsreduzierung erreicht, ohne dass die Wandstärke des Mischers 20 großflächig reduziert werden müsste.

Vorliegend sind die entsprechenden Stoßbereiche S1 bis S5 jeweils im Bereich der konvexen Außenwölbung 2100 und der konkaven Innenwölbungen 2200 der ersten und zweiten Leitelemente 210 und 220 vorgesehen. Hier sind jeweils mehrere Materiallagen paarweise auf Stoß angeordnet, wobei sich aber jeweils gleichzeitig mehrere zusätzliche Materiallagen über eine entsprechende Lücke I1 bis I9 zweier angrenzender Materiallagen hinweg erstreckt und diese überdecken. In radialer Richtung wechseln sich somit beispielsweise paarweise Materiallagen a1, b1, a2, b2, a3, b3, a4, b4, a5 miteinander ab, von denen jeweils lediglich jede zweite Materiallage b1 bis b4 im Bereich einer konvexen Außenwölbung 2100 eines ersten Leitelements 210 auf Stoß mit einer sich in Umfangsrichtung U hieran anschließenden Materiallage c1 bis c4 angeordnet ist. Die in radialer Richtung hieran angrenzenden Materiallagen a1 bis a5 erstrecken sich demgegenüber bis zur nächsten konkaven Innenwölbung 2200 eines zweiten Leitelements 2200 und grenzen erst hier an einen Rand einer weiteren Materiallage d1-d5 an. Die Materiallagen a1 bis d5 erstrecken sich somit in Umfangsrichtung U vorliegend zwar jeweils mit derselben Länge, sind jedoch schichtweise in Umfangsrichtung U zueinander versetzt, sodass in radialer Richtung aneinander angrenzende Materiallagen a1 bis d5 an unterschiedlichen ersten und zweiten Leitelementen 210, 220 enden.

Beispielsweise überspannen erste Materiallagen a1 bis a5 zwischen Stoßbereichen S3 und S5 jeweils vollständig eine erste und zweite Seitenwand 233, 231 sowie eine konvexe Außenwölbung 2100 eines ersten Leitelements 210 und erstrecken sich damit zwischen zwei konkaven Innenwölbungen 2200 zweier angrenzender zweiter Leitelemente 220. Die hiermit zusammengeschichteten Materiallagen b1 bis b4 oder c1 bis c4 enden demgegenüber im Stoßbereich S4 der konvexen Außenwölbung 2100 des ersten Leitelements 210 und sind hier stumpf aneinandergesetzt. Diese Materiallagen b1 bis b4 und c1 bis c4 überspannen demgegenüber in Umfangsrichtung U ausgehend von dem Stoßbereich S4 an der konvexen Außenwölbung 2100 jeweils das eine im Uhrzeigersinn angrenzende oder das andere entgegen dem Uhrzeigersinn angrenzende zweite Leitelement 220 sowie die jeweilige zugehörige konkave Innenwölbung 2200 an dem Stoßbereich S3 oder S5.

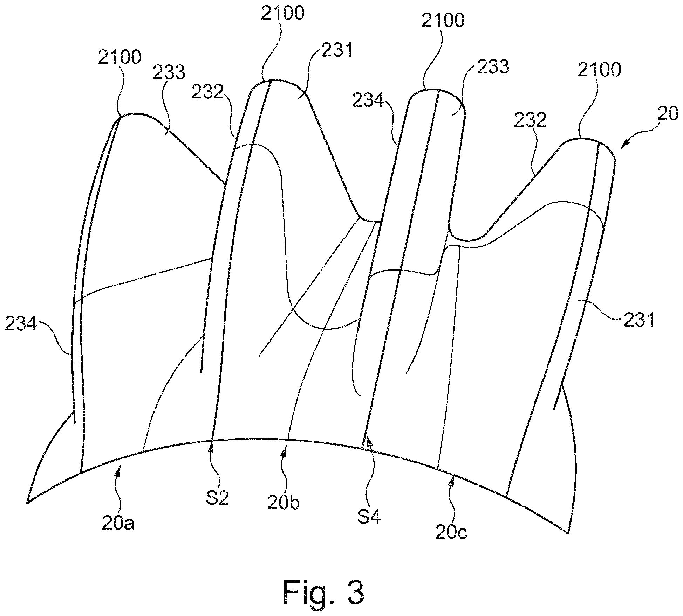

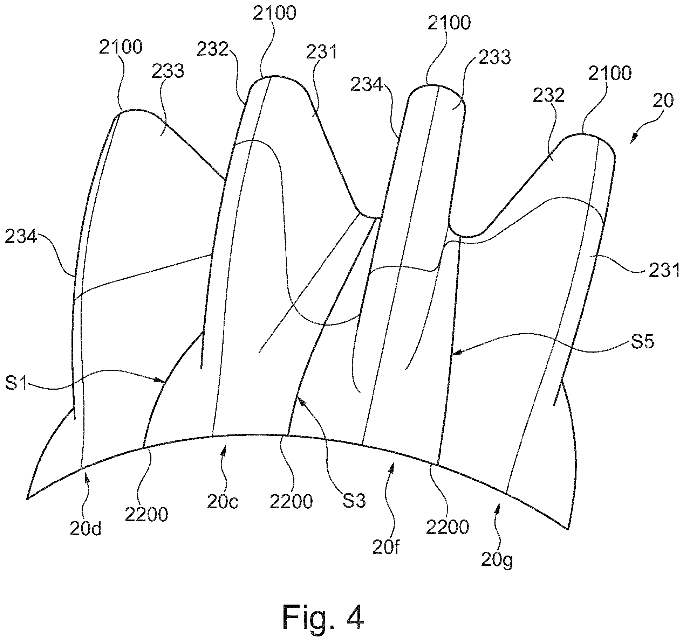

Anhand der Figuren 3 und 4 werden Materiallagen 20a bis 20g veranschaulicht, die jeweils durch eine Fasermatte gebildet werden. Während bei der Variante der Figur 3 einzelnen Fasermatten 20a bis 20c jeweils ein einzelnes zweites Leitelement 220 definieren und im Bereich einer konvexen Außenwölbung 2100 angrenzender erster Leitelemente 210 auf Stoß zueinander angeordnet sind, bilden Fasermatten 20d bis 20g der Figur 4 die einzelnen Leitelemente 210 vollständig aus und sind im Bereich der konkaven Innenwölbungen der hieran angrenzenden zweiten Leitelemente 220 auf Stoß zueinander angeordnet. Sind folglich die Stoßbereiche S2 und S4 in der Variante der Figur 3 in Strömungsrichtung und damit entlang der Längsrichtung L an den konvex gewölbten und radial auswärts verlaufenden ersten Leitelementen vorgesehen, befinden sich Stoßbereiche S1, S3 und S5 in der Variante der Figur 4 an den konkaven Innenwölbungen 2200 der zweiten Leitelemente 220 und laufen damit entlang der Längsrichtung L radial einwärts. In beiden Fällen kann durch die entsprechende Segmentierung und damit Bildung einzelner radial auswärts oder radial einwärts verlaufender Leitelemente 210 und 220 ein stückweiser Aufbau des Mischers 20 erfolgen, bei dem gezielt und gleichmäßig über den Umfang verteilt Bereiche gezielt reduzierter Steifigkeit vorgesehen werden.

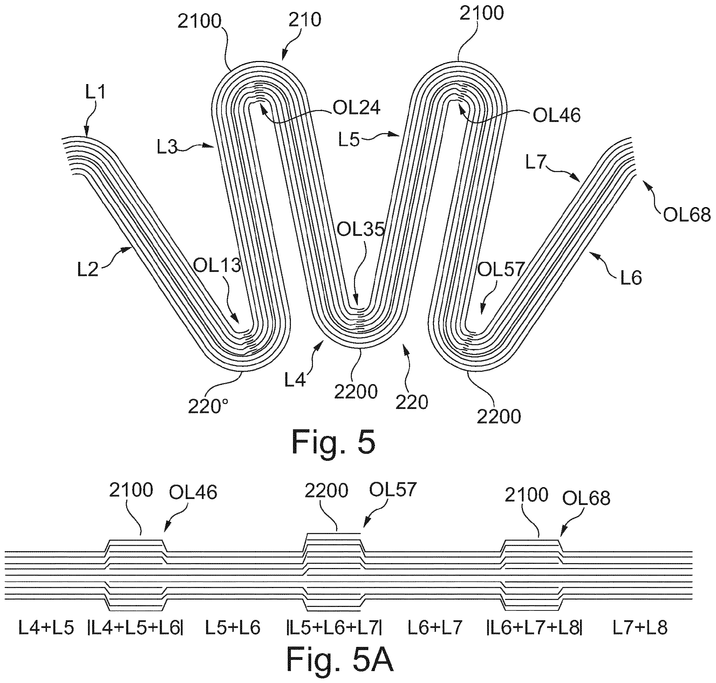

Bei der Variante der Figuren 5, 5A, 6 und 7 ist demgegenüber, gemäß der vorgeschlagenen Lösung, eine gezielte Versteifung und Verdickung der Mischerstruktur im Bereich der konvexen Außenwölbungen 2100 und der konkaven Innenwölbungen 2200 durch sich randseitig überlappende Materiallagen vorgesehen.

Hierbei werden Materiallagenverbunde L1-L8 einander in axialer Richtung randseitig überlappend angeordnet. Dabei endet im Bereich der jeweiligen Wölbung 2100, 2200 jedoch vorliegend jeweils nur ein Teil der hier vorliegenden Materiallagen, sodass sich auch nur dieser Teil im Bereich einer Wölbung 2100 oder 2200 randseitig überlappt. Beispielsweise ist die durchgehende Wandung des Mischers 20 aus insgesamt m plus n Materiallagen aufgebaut. Hierbei sind jeweils m Materiallagen einem ersten Materiallagenverbund L1, L3, L5 oder L7 zugeordnet, während n Materiallagen einem weiteren Materialverbund L2, L4, L6 oder L8 zugeordnet sind. An jeder Seitenwand 231-234 liegen dann die einzelnen Materiallagen dieser Materiallagenverbunde L1 bis L8 in radialer Richtung aufeinander geschichtet vor. An einer Wölbung 2100 oder 2200 enden jeweils nur zwei Materiallagenverbunde L1/L3, L2/L4, L3/L5, L4/L6, L5/L7 oder L6/L8, deren Materiallagen einander randseitig überlappen, während sich ein dritter Materiallagenverbund L2, L3, L4, L5 oder L6 mit mehreren Materiallagen über die jeweilige Wölbung 2100 oder 2200 hinweg erstreckt.

Dementsprechend liegen im Bereich der Wölbungen 2100 und 2200 jeweils Überlappungsbereiche OL13, OL24, OL35, OL46, OL57 und OL68 vor. An diesen Überlappungsbereichen OL13, OL24, OL35, OL46, OL57 und OL68 ist die Struktur des Mischers 20 durch die sich randseitig überlappenden Materiallagen eines Paares vorn Materiallagenverbunden L1/L3, L2/L4, L3/L5, L4/L6, L5/L7 oder L6/L8 lokal versteift und verdickt, während an diesen Überlappungsbereichen OL13, OL24, OL35, OL46, OL57 und OL68 gleichzeitig Materiallagen eines dritten Materiallagenverbundes L2, L3, L4, L5 oder L6 nicht unterbrochen sind. Hierdurch wird eine lokale Verdickung der Mischerstrukturen im Bereich der Wölbungen 2100 und 2200 über die gesamte Länge des Mischer 20 (entlang der Längsrichtung L) im Bereich der ersten und zweiten Leitelemente 210 und 220 um 50% gegenüber einer jeweils durchgängigen Anordnung der Materiallagen in Kauf genommen, um die Herstellung des Mischers 20 durch segmentweise Anordnung der Materiallagen zu vereinfachen und zudem gezielt Versteifungsstrukturen einzubringen.

Wie anhand der aufgefalteten Darstellung der Figur 5A für eine hierauf basierende Variante mit abweichender Gruppierung respektive Schichtung der Materiallagen dargestellt ist, liegen durch sich paarweise randseitig überlappende Materiallagen zweier aneinander angrenzender Materiallagenverbunde in den jeweiligen Überlappungsbereichen OL46, OL57 und OL68 Verdickungen vor. Diese Verdickungen können jedoch beispielsweise bei den radial auswärts verlaufenden ersten Leitelementen 210 an einer Außenkontur und bei den radial einwärts verlaufenden zweiten Leitelementen 220 an einer Innenkontur des Mischer 20 vorgesehen werden, um deren Einfluss auf die Fluidströme f1 und f2 möglichst gering zu halten.

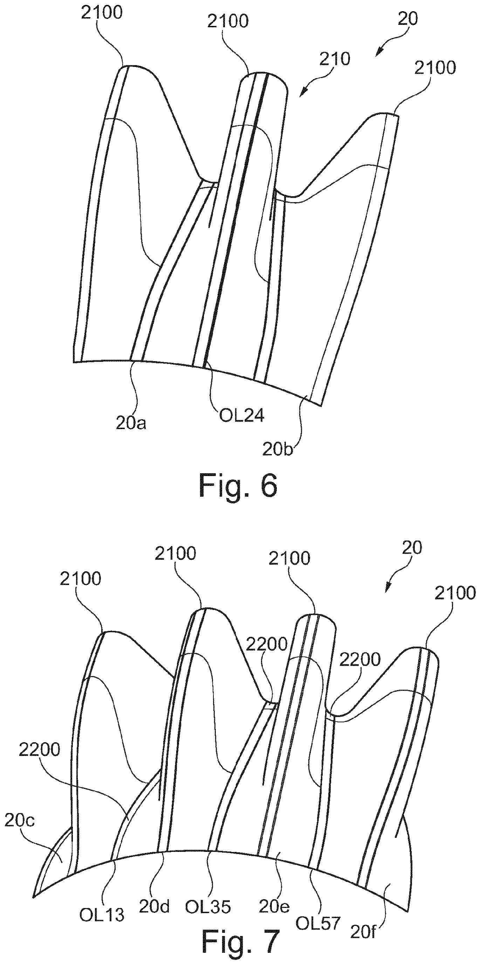

Anhand der Figuren 6 und 7 werden in Analogie zu den Figuren 3 und 4 mögliche Varianten für einen Aufbau des Mischers 20 aus einzelnen segmentweise angeordneten Fasermatten 20a bis 20f veranschaulicht. Hierbei überlappen sich die Materiallagen im Bereich der konvexen Auswölbungen 2100 der ersten Leitelemente 210 und damit an den "Hügel" ("lobes") des Mischers 20 oder im Bereich der konkaven Innenwölbungen 2200 der zweiten Leitelemente 220 und damit an den "Tälern" ("gullies") des Mischers 20 jeweils randseitig.

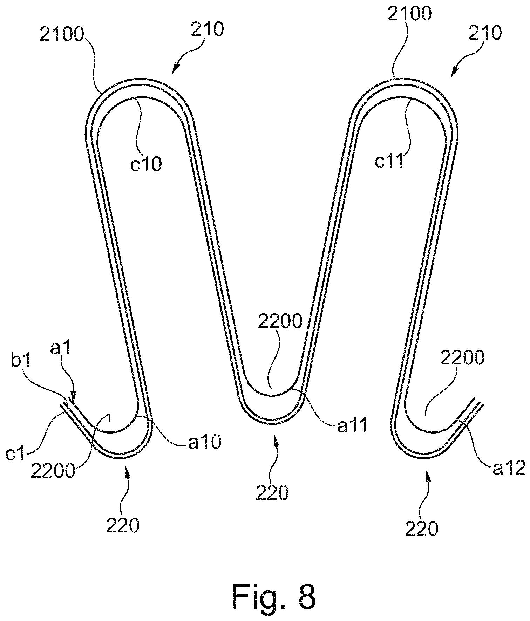

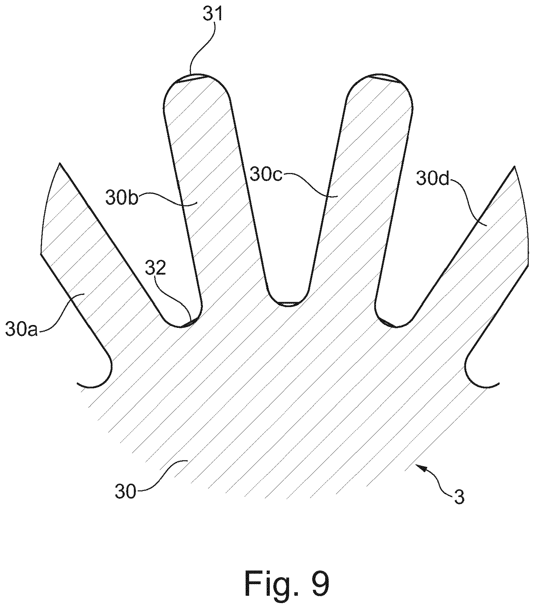

Je nach Größe der Fasermatten zur Bildung einzelner aufeinandergeschichteter Materiallagen a1, b1 und c1 können sich diese selbstverständlich auch über mehrere radial auswärts verlaufende erste und radial einwärts verlaufende zweite Leitelemente 210, 220 des Mischer 20 erstrecken. Ein in der Figur 8 dargestelltes und z.B. mit einem Herstellungswerkzeug 3 der Figur 9 hergestelltes Segment des Mischers 20 weist dementsprechend exemplarisch drei Materiallagen a1, b1 und c1 auf. Hierbei bilden an einer konkaven Innenwölbung 2200 außenseitig jeweils ein Innenabschnitt a10, a11 oder a12 einer radial außen liegenden Materiallage a1 sowie an einer konvexen Außenwölbungen 2100 innenseitig jeweils ein Innenabschnitt c10 oder c11 einer radial innenliegenden Materiallage c1 eine lokale Verdickung der Wandung des Mischers 20 aus. Eine solche Verdickung ist jedoch jeweils ohne (relevanten) Einfluss auf die Strömung an dem jeweiligen Innenabschnitt a10 bis a12 oder c10, c11 entlang.

Für die Herstellung des Mischers 20 aus einzelnen Materiallagen, die sich nicht über den gesamten Umfang des Mischers 20 erstrecken, ist beispielsweise eine Positivform als Herstellungswerkzeug 3 vorgesehen, das einen Grundkörper 30 mit radial nach außen vorstehenden Radialarmen 30a bis 30d entsprechend der Figur 9 aufweist. Diese Radialarme 30a bis 30d mit den dazwischen liegenden, im Querschnitt trichterförmigen Lücken definieren die blütenförmige oder mäanderförmigen Kontur des herzustellenden Mischers 20. Die einzelnen Materiallagen oder Materiallagenverbunde werden dementsprechend an einer Außenkontur des entsprechenden Herstellungswerkzeugs 3 angeordnet, beispielsweise hieran entsprechend drapiert, bevor anschließend eine Härtung erfolgt, zum Beispiel durch Einbringen des Matrixmaterials zwischen die Fasern durch Infiltration mit einem Harzmaterial und/oder thermischer Behandlung der Materiallagen.

Um im Bereich der konvexen Auswölbung 2100 und der konkaven Innenwölbung 2200 eine lokale Verdickung und Versteifung durch einander randseitig überlappende Materiallagen vorsehen zu können, ohne hierbei die Wanddicke der Mischerstruktur gegenüber einer Materiallagenanordnung ohne eine entsprechende Überlappung wesentlich zu erhöhen, ist das Herstellungswerkzeug 3 im Bereich eines radial äußersten Abschnitts jedes Radialarms 30a bis 30d sowie an einem radial innersten Abschnitt der jeweiligen dazwischenliegenden Lücke mit einer Kompensationskontur versehen. Hierbei handelt es sich beispielsweise um eine Abflachung oder Materialrücknahme im Bereich der radial äußersten Abschnitte der Radialarme 30a bis 30d oder um eine Materialaufdickung 32 im Bereich der zwischen den vorstehenden Radialarmen 30a bis 30d gebildeten trichterförmige Lücken. Die auf das entsprechende Herstellungswerkzeug 3 drapierten Materiallagen bilden hierdurch an den jeweiligen Überlappungsbereichen OL13 bis OL68 eine Kontur aus, die lediglich geringfügig lokal verdickt erscheint und die hierüber geführten Fluidströme f1 und f2 kaum oder überhaupt nicht beeinflusst.

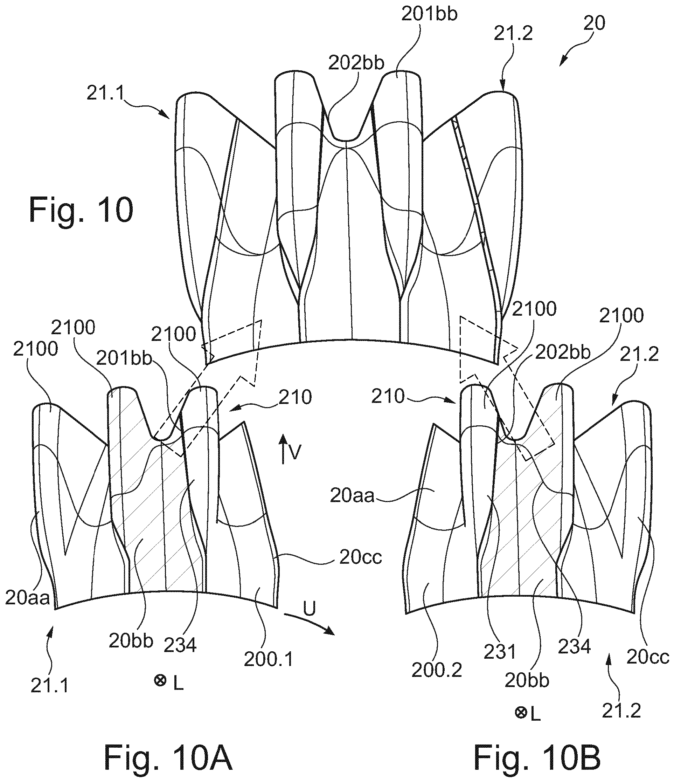

Mit Blick auf einen möglichen festigkeitsorientierten Verlauf der Überlappungsbereiche mindestens zweier Materiallagen kann in einer Ausführungsvariante auch vorgesehen sein, dass die sich überlappenden Randkanten nicht (durchweg) parallel zur Längsrichtung L oder der Mittelachse M verlaufen. Bei einer in den Figuren 10, 10A und 10B veranschaulichten Ausführungsvariante verlaufen Randkanten 201bb und 202bb sich überlappender Materiallagen 20aa bis 20cc im Dreidimensionalen und bezüglich wenigstens zweier zueinander senkrechter Raumachsen gekrümmt. Hierbei ist ein Teilstück des Mischers 20 mit mehreren ersten und zweiten Leitelementen 210, 220 durch zwei Mischersegmente 21.1 und 21.2 gebildet, die jeweils mehrere (vorliegend drei) sich paarweise randseitig überlappende Materiallagen 20aa bis 20cc umfassen.

Die einzelnen Materiallagen 20aa bis 20cc definieren dabei jeweils ein Randsegment 200.1 oder 200.2 für den Mischerrand 200 und erstrecken sich (wie auch die Segmente der vorangegangenen Ausführungsvarianten) über die gesamte axiale Länge des Mischers 20. Im Unterschied zu den vorstehend erläuterten Ausführungsvarianten verlaufen die sich überlappenden Randkanten 201bb und 202bb nicht axial geradlinig, sondern weisen jeweils einen Verlauf auf, der bezogen auf die Mittelachse M des fertiggestellten Mischers 20 zusätzlich zu einer axialen Richtungskomponente sowohl eine Richtungskomponente in Umfangsrichtung U als auch eine Richtungskomponente in radialer Richtung r umfasst. Die einzelnen Randkanten 201bb und 202bb verlaufen somit nach Art eines Polynomzugs, sodass ein stromauf im Bereich des jeweiligen Randsegments 200.1 oder 200.2 liegender Startpunkt einer Randkante 201bb oder 202bb bezüglich aller drei zueinander senkrechter Raumrichtungen versetzt zu wenigstens einem weiteren stromab in Längsrichtung L liegendem Punkt der jeweiligen Randkante 201bb oder 202bb vorliegt. Bei einer in der Figur 10A dargestellten Randkante 201bb einer Materiallage 20bb ist beispielsweise mit Blick entlang der Längsrichtung L ausgehend von einem Startpunkt an dem Randsegment 200.1 einerseits eine linksseitige Krümmung und andererseits eine radial auswärts weisende Krümmung der Randkante 201bb vorgesehen. Bei einer in der Figur 10B dargestellten Randkante 202bb ist demgegenüber einerseits eine rechtsseitige Krümmung und radial auswärts weisende Krümmung vorgesehen.

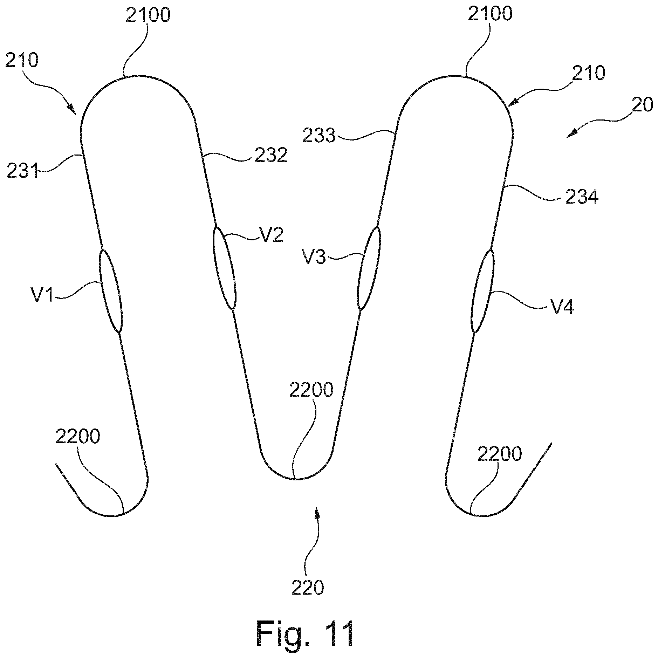

Die einzelnen und jeweils aus mehreren Materiallagen 20aa bis 20cc bestehenden Mischersegmente 21.1 und 21.2 werden an einem Herstellungswerkzeug 3 einander überdeckend zur Anlage gebracht, sodass sich an wenigstens zwei ersten Leitelementen 210 jeweils zwei Materiallagen 20bb/20aa und 20cc/20bb der beiden Mischersegmente 21.1 und 21.2 großflächig überlappen. Auf diese Weise sind dann an den Randkanten 201bb und 202bb entlang beiderseits eines konvex gewölbten ersten Leitelements 210 zusätzlich dreidimensional verlaufende Überlappungsbereiche vorgesehen. Es entstehen insbesondere an dem entlang der Umfangsrichtung U einander gegenüberliegenden und an sich flachen Seitenwandungen 231-234 in etwa mittig lokale sich in axialer Richtung erstreckende Verdickungen V1 bis V4, die die Mischerstruktur lokal und ohne störenden Einfluss auf die über den Mischer 20 geleiteten Fluidströmung f1 und f2 versteifen. Dies ist insbesondere anhand der Schnittdarstellung der Figur 11 exemplarisch veranschaulicht.

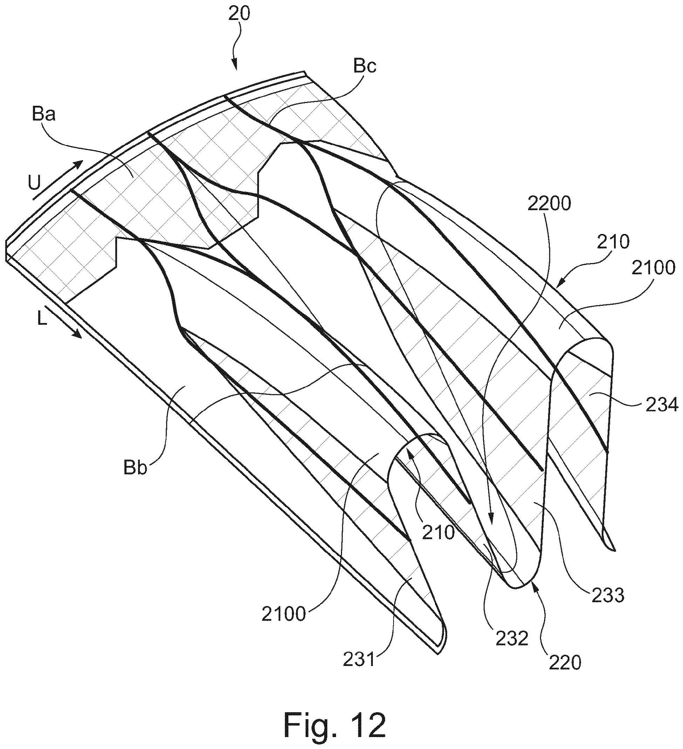

Ein in der Figur 12 dargestelltes Segment des Mischers 20 veranschaulicht ferner die durch entsprechende Anordnung und insbesondere randseitige Überlappung einzelner Materiallagen an dem Mischer 20 definierte Materialbereiche Ba, Bb und Bc unterschiedlicher Steifigkeit. In einem mischerrandnahen Bereich wie auch über einen Großteil der Seitenwände 231-234 (Materialbereich Ba) ist eine größtenteils geringe Krümmung des Materials und geringe Steifigkeit vorgesehen. In einem weiteren Materialbereich Bb der die konvexen Außenwölbungen 2100 und die konkaven Innenwölbungen 2200 der beiden ersten und zweiten Leitelemente 210 und 220 umfasst, ist über die aufeinandergeschichteten Materiallagen des keramischen Faserverbundwerkstoffs jeweils ein Bereich höherer Steifigkeit gebildet. In Materialbereichen Bc die sich über die axiale Länge des Mischer 20 und beiderseits einer konvexen Außenwölbung 2100 an sich gegenüberliegenden Seitenwänden 231, 232 und 233, 234 erstrecken, ist eine lokale Versteifung durch sich randseitig überlappende Materiallagen vorgesehen.

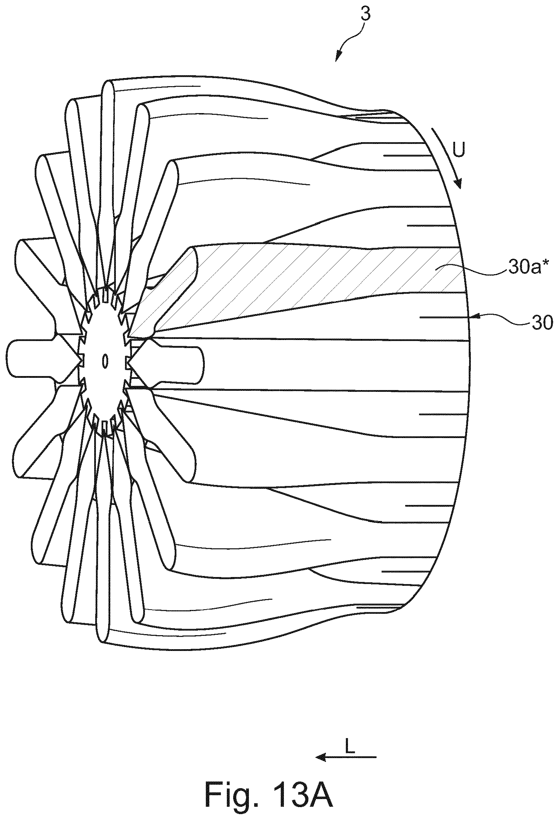

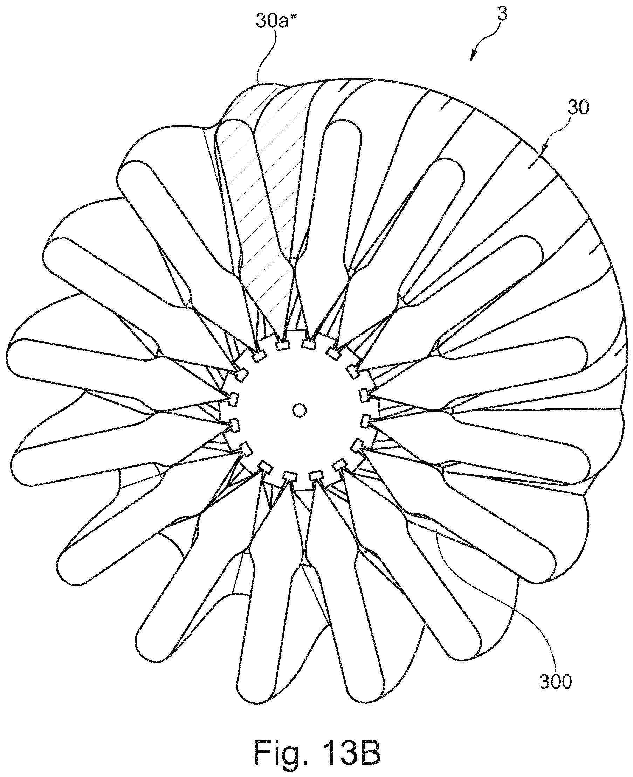

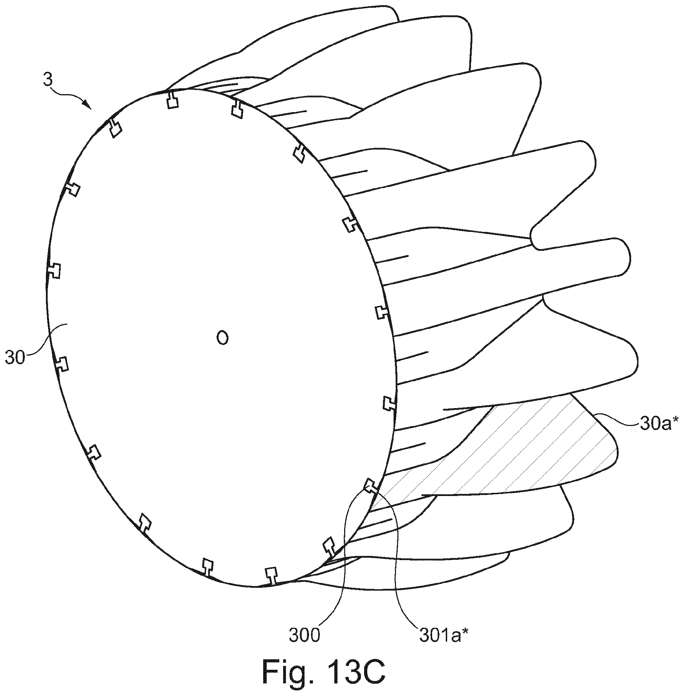

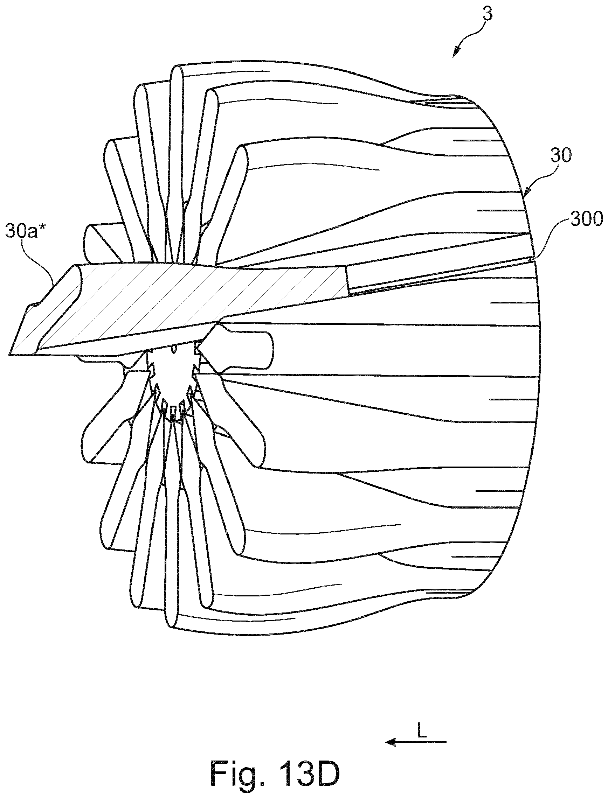

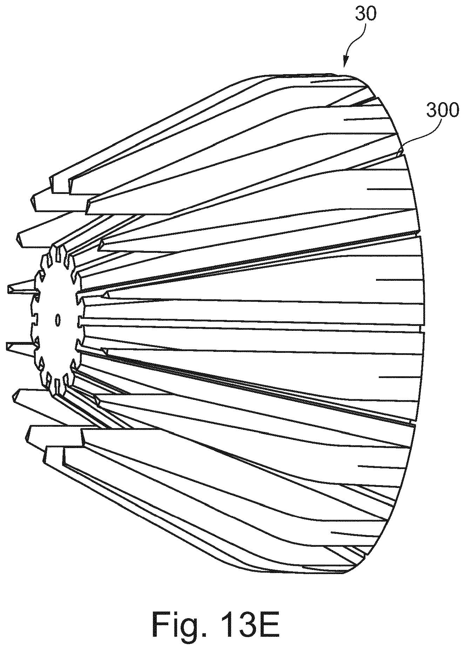

Ein in den Figuren 13A bis 13E veranschaulichtes Herstellungswerkzeug 3 kann insbesondere für die Herstellung eines segmentweise aufgebauten Mischers 20 entsprechend den vorstehend erläuterten Ausführungsvarianten genutzt werden. Das Herstellungswerkzeug 3 bildet dabei als Positivform die Kontur des Mischers 20 ab, sodass an der Außenkontur des Herstellungswerkzeugs 3 drapierte Materiallagen in Form von Fasermatten die gewünschte blütenförmige oder mäanderförmige Kontur des Mischers 20 ergeben. Das Herstellungswerkzeug 3 erstreckt sich dementsprechend entlang einer Längsrichtung L und weist radial vorstehende Radialarme 30a* auf, die die Kontur der radial auswärts verlaufenden ersten Leitelemente 210 nachbilden. Die einzelnen Radialarme 30a* sind hierbei jeweils formschlüssig an einem Grundkörper 30 gehalten, der über zwischen den einzelnen Radialarmen 30a* definierte Lücken die radial einwärts verlaufenden zweiten Leitelemente 220 des Mischer 20 nachbildet.

Der Grundkörper 30 des Herstellungswerkzeugs 3 verjüngt sich vorliegend entlang einer Längsrichtung L, während sich die einzelnen Radialarme 30a* entgegengesetzt hierzu verjüngen, um die entsprechende Kontur des Mischers 20 nachzubilden. Um hierbei ein Entformen des an dem Herstellungswerkzeugs 3 ausgehärteten Mischers 20 zu vereinfachen, sind die einzelnen Radialarme 30a* jeweils längsverschieblich an dem Grundkörper 30 gehalten. Für ein Entformen des Mischers 20 kann somit jeder Radialarm 30a* in Längsrichtung L von dem Grundkörper 30 getrennt werden. Der Grundkörper 30 bildet hierfür mehrere längserstreckte Befestigungsnuten 300 aus. In jede Befestigungsnut 300 ist nach Art einer Schwalbenschwanzverbindung jeweils ein längserstreckter Befestigungssteg 301a* eines Radialarmes 30a* eingeschoben, wenn an dem Herstellungswerkzeug 3 die Komponenten des keramischen Faserverbundwerkstoffs für die Herstellung des CMC-Mischer 20 angeordnet werden.

Der Grundkörper 30 und/oder die hieran einschiebbaren Radialarme 30a* können beispielsweise aus einem Material hergestellt sein, das einen Wärmeausdehnungskoeffizienten größer 17/10⁻⁶ K aufweist. Beispielsweise kann ein entsprechendes Herstellungsmaterial Aluminium umfassen. Nach einer Abkühlung des Herstellungswerkzeugs 3 schrumpft damit der Grundkörper 30 und/oder der jeweilige Radialarm 30a*, wodurch das Entformen des ausgehärteten Mischers 20 erheblich erleichtert ist.

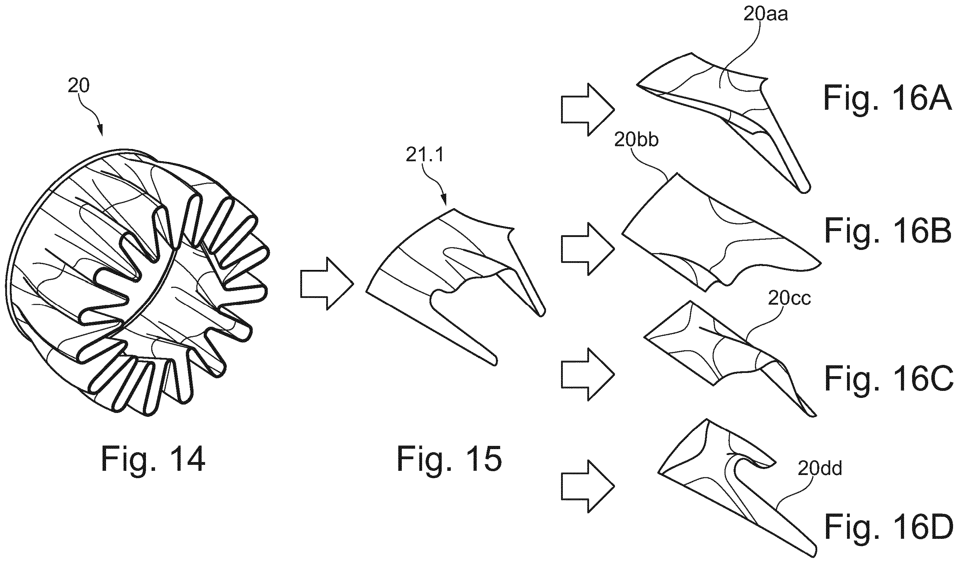

Anhand der Figuren 14 bis 19 ist ferner eine Ausführungsvariante eines möglichen Herstellungsverfahrens veranschaulicht, das sich gegebenenfalls auch das Herstellungswerkzeug 3 der Figuren 13A bis 13E zunutze macht und mittels dem insbesondere ein Mischer 20 der vorstehend erläuterten Ausführungsvarianten hergestellt werden kann.

Im Rahmen der dargestellten Ausführungsvariante wird ein Mischer mit blütenförmiger oder mäanderförmiger Kontur entsprechend der Figur 14 computergestützt und automatisiert mittels einer Software virtuell in eine Vielzahl einzelner Mischersegmente 21.1 aufgeteilt, von denen eines in Figur 15 exemplarisch dargestellt ist. Im Anschluss hieran wird über einen Algorithmus unter Vorgabe wenigstens eines Designparameters, zum Beispiel unter Vorgabe der Lage und des Verlaufs lokaler Versteifungen durch sich randseitig überlappender Materiallagen automatisiert bestimmt, durch welche Anzahl an Materiallagen 20aa bis 20dd das entsprechende Mischersegment 21.1 erzeugt werden kann. Zudem wird hierbei jeweils bestimmt, welche Geometrie die einzelnen Materiallagen 20aa bis 20dd entsprechend den Figuren 16A bis 16D hierfür aufweisen müssen.

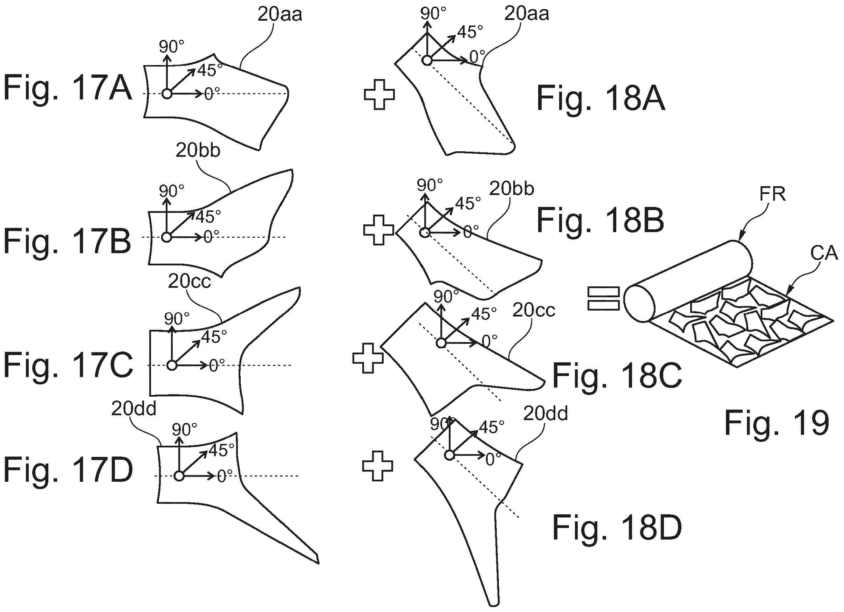

In einem nachfolgenden Simulationsschritt wird entsprechend den Figuren 17A bis 17D und 18A bis 18D ermittelt, wie die einzelnen Materiallagen 20aa bis 20dd auf einer beispielsweise rechteckigen Materialfläche angeordnet werden müssen, sodass diese mit möglichst geringem Verschnitt aus dieser Materialfläche ausgeschnitten werden können. Der entsprechende Algorithmus bestimmt folglich beispielsweise in welcher Orientierung die einzelnen Materiallagen 20aa bis 20dd virtuell auf der Materialfläche angeordnet werden müssen, sodass bei einem Ausschneiden möglichst wenig Fasermaterial ungenutzt bleibt. Die nutzbare Materialfläche ergibt sich beispielsweise durch Abwicklung von einer Gewebe- oder Faserrolle FR entsprechend der Figur 19. Es wird damit z.B. computergestützt und automatisiert eine Anordnung von Schnittlinien CA auf der Materialfläche der Faserrolle FR vorgegeben und an eine entsprechende Bearbeitungsvorrichtung elektronisch übermittelt, die dann die einzelnen Materiallagen 20aa bis 20dd aus der Materialfläche entlang dieser Schnittlinien ausschneidet. Im Anschluss werden dann die derart erzeugten Materiallagen 20aa bis 20dd an einem Herstellungswerkzeug, wie zum Beispiel der Herstellungswerkzeug 3 der Figuren 13A bis 13E, wie berechnet drapiert, um das einzelne Mischersegment 21.1 der Figur 15 auszubilden.

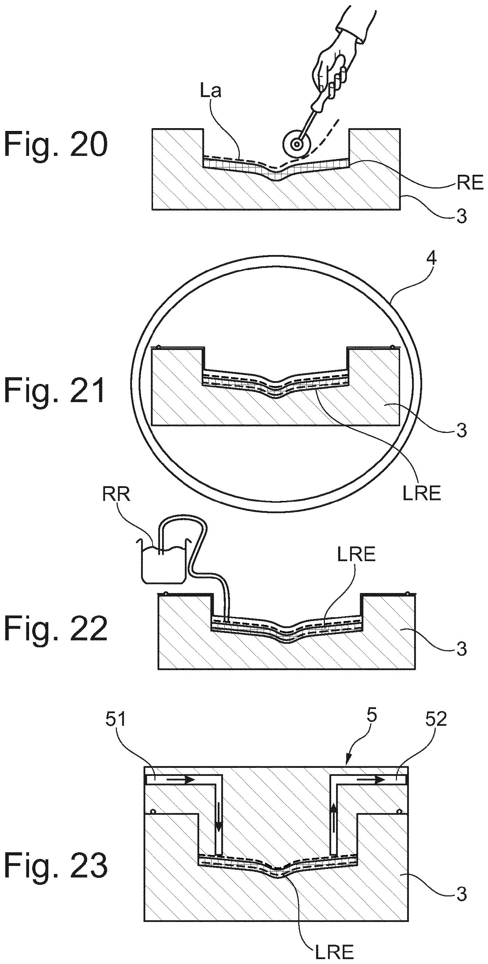

Bei den Materiallagen 20aa-20dd kann es sich um sogenannte trockene Fasermatten oder imprägnierte Fasermatten mit keramischen Filamenten handeln. Je nach zugrundeliegendem Fasermaterial können unterschiedliche weitere Prozessschritte für die Härtung und damit Fertigstellung des Mischers 20 vorgesehen sein. Anhand der Figuren 20 bis 23 sind mögliche Varianten exemplarisch veranschaulicht.

Beispielsweise können die einzelnen Materiallagen entsprechend der Figur 20 als Schichtverbund LA in einem als Positiv- oder Negativform genutzten Herstellungswerkzeug 3 positioniert werden. Der entsprechende Materiallagenverbund La ist dann schichtweise bereits mit einem entsprechenden Matrixmaterial, z.B. Harz, getränkt. Zur Aushärtung werden etwaige Lufteinschlüsse aus dem an dem Herstellungswerkzeug 3 angeordneten Materiallagenverbund (Laminat) La herausgepresst und eine Wärmebehandlung durchgeführt.

Bei der Nutzung vorimprägnierter Fasermatten und eines damit gebildeten imprägnierten Schichtverbunds LRE kann ein Autoklavenverfahren als Teil der Härtung umgesetzt sein. Hier wird unter Verwendung eines in der Figur 21 schematisch dargestellten Autoklaven 4 eine Härtung durchgeführt.

Die Figur 22 veranschaulicht schematisch eine Härtung unter Nutzung eines Infusionsverfahrens, zum Beispiel einem sogenannten VAP®- oder VARI-Verfahrens, bei dem einem in dem Herstellungswerkzeug 3 unter Vakuum angeordneten Schichtverbund LRE Matrixmaterial, zum Beispiel ein Harz, aus einem Matrixreservoir RR zugeführt wird.

Das anhand der Figur 23 dargestellte Injektionsverfahren, z.B. ein RTM-Verfahren, führt demgegenüber einem zwischen zwei Werkzeugteilen aufgenommenen Schichtverbund LRE Matrixmaterial über einen Zufluss 51 eines Injektionswerkzeugs 5 zu, wobei überschüssiges Matrixmaterial und etwaige Ausgasungen über einen Abfluss 52 des Injektionswerkzeugs 5 abgeführt werden.

Mit dem vorgesehenen schichtweisen und/oder segmentweisen Aufbau eines Mischers 20 mit blütenförmiger oder mäanderförmiger Kontur vorzugsweise aus einem keramischen Faserverbundwerkstoff lassen sich unterschiedliche Härtungsverfahren insbesondere entsprechend den Figuren 20 bis 23 mittels verschiedener Herstellungswerkzeuge 3, 3inv problemlos umsetzen, die die Kontur des Mischer 30 als Positiv- oder Negativform abbilden. Hierbei ist insbesondere über längsverschiebliche Radialarme 30a* oder 30inv des jeweiligen Herstellungswerkzeugs 3, 3inv ein erleichtertes Entformen des Mischers 20 erreicht.

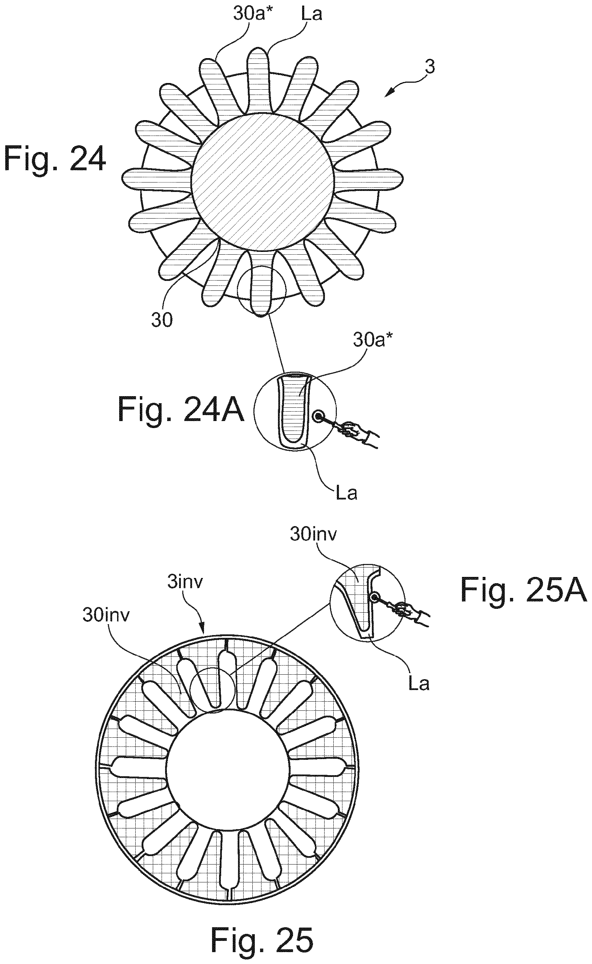

Die Figuren 24 und 24A veranschaulichen hierbei nochmals ein Herstellungswerkzeug 3, mit einem konusförmigen Grundkörper 30, an dem radial vorstehende Radialarme 30a* für die Definition der ersten und zweiten Leitelemente 210 und 220 des Mischers 20 verschieblich gehalten sind. Hierbei werden die einzelnen Materiallagen als Schichtverbund(e) La an der Außenkontur des Herstellungswerkzeugs 3 angeordnet, beispielsweise manuell oder maschinell mittels vorimprägnierter Fasermatten oder trockener Fasermatten.

Mit einem Herstellungswerkzeug 3inv entsprechend den Figuren 25 und 25A ist eine Negativform vorgegeben. Hierbei umrandet das Herstellungswerkzeug 3inv einen Hohlraum kreisringförmig, der die Mischeröffnung O des herzustellen Mischers 20 definiert und in den radial nach innen Radialarme 30inv vorstehen. Diese Radialarme 30inv definieren im Zusammenspiel mit dazwischenliegenden Lücken die Außenkontur der zweiten Leitelemente 220 wie auch der ersten Leitelemente 210 des Mischers 20. Ein Materiallagenverbunden La wird in dieser Variante somit innenseitig an der Innenkontur des Herstellungswerkzeugs 3inv entlang angeordnet, um den Mischer 20 einstückig herzustellen. Auch hier sind die einzelnen Radialarme 30inv längsverschieblich, sodass eine Entformung des Mischers 20 erheblich vereinfacht ist.

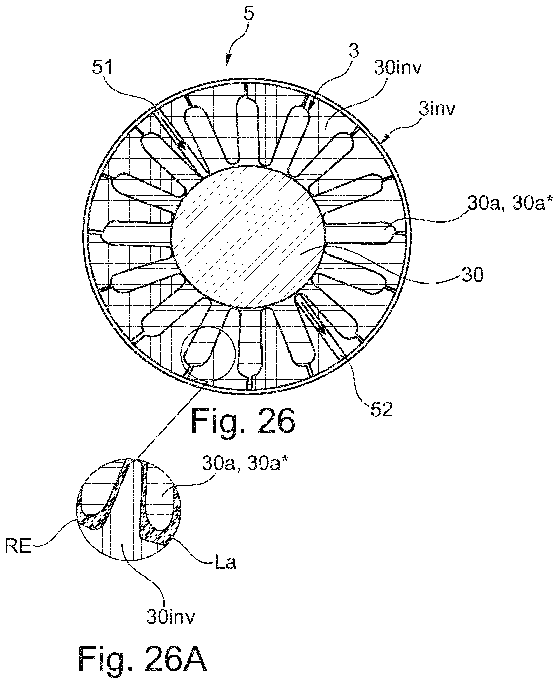

Bei dem Injektionswerkzeug 5 der Figuren 26 und 26A sind die beiden Herstellungswerkzeuge 3 und 3inv miteinander kombiniert. Die Herstellungswerkzeuge können z.B. aneinander gesteckt werden, sodass das eine Herstellungswerkzeug 3 ein inneres Werkzeugteil und das andere Herstellungswerkzeug 3inv ein äußeres Werkzeugteil bildet. Die beiden Herstellungswerkzeuge 3 und 3inv definierten dann zwischen sich einen umfangsseitig durchgehenden Hohlraum, dessen Kontur der Kontur des Mischers 20 entspricht. Die einzelnen Materiallagen werden hierbei vor dem Zusammenführen der beiden Herstellungswerkzeuge 3 und 3inv an der Außenkontur des Herstellungswerkzeugs 3 oder der Innenkontur des hierzu invertiert ausgebildeten Herstellungswerkzeugs 3inv angeordnet. Nach Verbindung der beiden Herstellungswerkzeuge 3 und 3inv wird über den Zufluss 51 des Injektionswerkzeugs 5 das Matrixmaterial RE, zum Beispiel in Form eines Harzes, zugeführt. Nach einem entsprechenden Härtungsprozess liegt dann der Mischer 20 als einstückig ausgeformtes Bauteil aus einem keramischen Faserverbundwerkstoff vor und kann aus dem Injektionswerkzeug 5 entnommen werden.

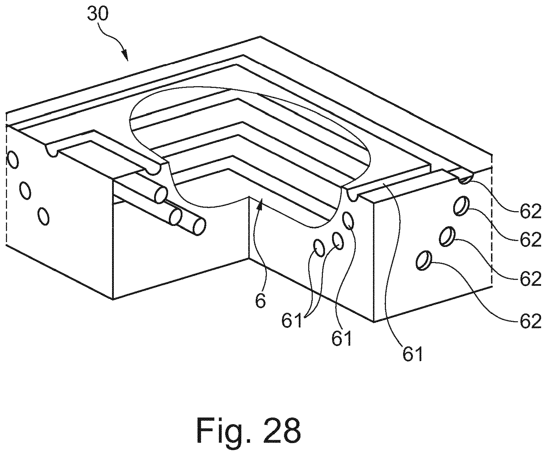

Die Figur 28 zeigt einen Ausschnitt des Grundkörpers 30 des Herstellungswerkzeugs 3 oder 3inv. Der hier ausschnittsweise dargestellte Grundkörper 30 weist für die Herstellung eines Mischers 20 mit parallel zueinander verlaufenden und sich in axialer Richtung erstreckenden Seitenwänden 231 - 234 der ersten und zweiten Leitelemente 210, 220 ein Kanalsystem 6 auf. Das Kanalsystem 6 dient der gezielten Erwärmung und/oder Kühlung des Herstellungswerkzeugs 3, 3inv mittels eines Fluids, z.B. Wasser oder Öl, sodass der Grundkörper 30 beispielsweise nach dem Härten des Mischers 20 effektiv abgekühlt und geschrumpft werden kann, um das Entformen zu erleichtern. Das Kanalsystem 6 weist vorliegend mehrfach verzweigte Fluidkanäle 61, 62 auf, die durch das Innere des Grundkörpers 30 verlaufen. Das Kanalsystem 6 kann alternativ oder ergänzend entsprechende Fluidkanäle 61, 62 in den gegebenenfalls mit dem Grundkörper lösbar verbundenen Radialarmen 30a-30d, 30a*, 30inv aufweisen, sodass (auch) die sich radial erstreckenden Radialarme 30a-30d, 30a*, 30inv mittels eines im Inneren geführten Fluids gezielt erwärmt und/oder gekühlt werden können.

Das Vorsehen eines Kanalsystem 6 in dem Grundkörper 30 und/oder in den Radialarmen 30a-30d, 30a*, 30inv erweist sich z.B. in Kombination mit einem Grundkörper 30 oder Radialarmen 30a-30d, 30a*, 30inv, der oder die aus einem Material mit vergleichsweise hohem Wärmeausdehnungskoeffizienten, wie Aluminium, hergestellt ist/sind, von Vorteil. Hier kann über das in den Fluidkanälen 61, 62 des Kanalsystems 6 strömende Fluid die sich temperaturbedingt stark verändernde radiale Ausdehnung gezielt und insbesondere automatisiert gesteuert werden, um während der Anordnung der Materiallagen an dem Herstellungswerkzeug 3, 3inv und/oder der Härtung eine Erwärmung und für das Entformen eine Abkühlung des Grundkörpers 30 und/oder der Radialarme 30a-30d, 30a*, 30inv vorzusehen.

### Bezugszeichenliste

- 11: Niederdruckverdichter
- 12: Hochdruckverdichter
- 13: Hochdruckturbine
- 14: Mitteldruckturbine
- 15: Niederdruckturbine
- 2: Mischerbaugruppe
- 20: Mischer
- 200: Mischerand
- 200.1, 200.2: Randsegment
- 201bb, 202bb: Randkante
- 20a - 20g: Fasermatte / Materiallage
- 20aa, 20bb, 20cc, 20dd: Fasermatte / Materiallage
- 21: Schnittstelle
- 21.1, 21.2: Mischersegment
- 210: Leitelement
- 2100: Konvexe Außenwölbung
- 220: Leitelement
- 2200: Konkave Innenwölbung
- 231, 232, 233, 234: Seitenwand
- 3: Herstellungswerkzeug
- 30: Grundkörper
- 300: Befestigungsnut
- 301a*: Befestigungssteg
- 30a - 30d: Radialarm
- 30a*: Radialarm
- 30inv: Radialarm
- 31: Rücknahme
- 32: Aufdickung
- 3inv: Herstellungswerkzeug
- 4: Autoklav
- 5: Injektionswerkzeug
- 51: Zufluss
- 52: Abfluss
- 6: Kanalsystem
- 61, 62: (Fluid-) Kanal
- A: Auslass
- a1 - a5: Materiallage
- a10, a11, a12: Innenabschnitt
- B: Bypasskanal
- b1 - b4: Materiallage
- Ba: Materialbereich geringer Steifigkeit
- Bb: Materialbereich hoher Steifigkeit
- Bc: Überlappungsbereich
- BK: Brennkammerabschnitt
- C: Auslasskonus
- c1 - c4: Materiallage
- c10, c11: Innenabschnitt
- CA: Anordnung der Schnittlinien für Zuschnitt
- d1 - d5: Materiallage
- E: Einlass / Intake
- F: Fan
- f1, f2: Fluidstrom
- FC: Fangehäuse
- FR: Gewebe-/Faserrolle
- L: Längsrichtung
- L1 - L8, La: Materiallagenverbund
- I1 - I9: Lücke
- LRE: (mit Harz imprägnierter) Schichtverbund
- M: Mittelachse / Rotationsachse
- O: Mischeröffnung
- OL13, OL24, OL35,: Überlappungsbereich
- OL46, OL57, OL68 R: Einströmrichtung
- r: Radialrichtung
- RE: Matrixmaterial
- RR: Matrixreservoir
- S1 - S8: Stoßbereich
- T: (Turbofan-)Triebwerk
- TT: Turbine
- U: Umfangsrichtung
- V: Verdichter
- V1 - V4: Verdickungs- / Verstärkungsbereich

## Patentansprüche

1. Mischer für ein Triebwerk (T), der
- für die Mischung von Fluidströmen (f1, f2) aus einem Primärstromkanal und einem Sekundärstromkanal des Triebwerks (T) jeweils mehrere entlang einer Umfangsrichtung (U) sich abwechselnde und sich entlang einer Mittelachse (M) erstreckende, erste und zweite Leitelemente (210, 220) aufweist, wobei die ersten Leitelemente (210) mit wenigstens einem radial auswärts verlaufenden Abschnitt diffusorartig und die zweiten Leitelemente (220) mit wenigstens einem radial einwärts verlaufenden Abschnitt düsenartig ausgebildet sind, und
- der Mischer (20) aus einem Verbundwerkstoff mit mindestens zwei separaten Materiallagen (a1-a5, b1-b4, c1-c4, d1-d5; 20a-20g; 20aa-20dd) besteht,
**dadurch gekennzeichnet, dass**
die mindestens zwei Materiallagen (a1-a5, b1-b4, c1-c4, d1-d5; 20a-20g; 20aa-20dd) mit ihren Rändern entlang der Mittelachse (M) zur wenigstens lokalen Versteifung der Struktur des Mischers (20) einander überlappend angeordnet sind, und zwar in einem Bereich (OL13, OL24, OL35, OL46, OL57, OL68; S1-S8) des Mischers (20), in dem die ersten und zweiten Leitelemente (210, 220) vorgesehen sind, wobei
- zwei benachbarte erste und zweite Leitelemente (210, 220) eine gemeinsame Seitenwand (231-234) aufweisen, die zwischen einem radial äußersten Abschnitt des ersten Leitelementes (210) und einem radial innersten Abschnitt des zweiten Leitelements (220) verläuft, und die mindestens zwei Materiallagen (20aa-20dd) an dieser Seitenwand (231-234) entlang der Mittelachse (M) einander überlappend angeordnet sind, sodass durch die sich überlappenden Materiallagen (20aa-20dd) an der an sich flachen Seitenwand (231-234) in etwa mittig eine lokale, sich in axialer Richtung erstreckende Verdickung (V1-V4) gebildet ist, die die Struktur des Mischers (20) lokal versteift,
- sich längs der Mittelachse (M) erstreckende Randkanten (201bb, 202bb) der sich überlappenden Materiallagen (20aa-20dd) jeweils einen Verlauf aufweisen, der, bezogen auf die Mittelachse (M), zusätzlich zur einer axialen Richtungskomponente sowohl eine Richtungskomponente in Umfangsrichtung (U) als auch eine Richtungskomponente in radialer Richtung (r) umfasst, und
- die Randkanten (201bb, 202bb) bezüglich wenigstens zweier zueinander senkrechter Raumachsen gekrümmt verlaufen.

2. Mischer nach Anspruch 1, **dadurch gekennzeichnet, dass** die ersten Leitelemente (210) konvex gewölbt sind und/oder die zweiten Leitelemente (220) konkav gewölbt sind und die mindestens zwei Materiallagen (a1-a5, b1-b4, c1-c4, d1-d5; 20a-20g; 20aa-20dd) im Bereich der konvexen und/oder konkaven Wölbung entlang der Mittelachse (M) einander überlappend sind.

3. Mischer nach Anspruch 1 oder 2, **dadurch gekennzeichnet, dass** zusätzlich zu den mindestens zwei Materiallagen (a1-a5, b1-b4, c1-c4, d1-d5), die einander überlappend angeordnet sind, wenigstens eine weitere Materiallage (b1-b4, c1-c4, d1-d5, a1-a5) vorgesehen ist, die sich in Umfangsrichtung (U) über den Bereich (OL13, OL24, OL35, OL46, OL57, OL68; S1-S8) hinweg erstreckt, in dem Ränder der mindestens zwei Materiallagen (a1-a5, b1-b4, c1-c4, d1-d5) aufeinanderliegen oder aneinander angrenzen.

4. Mischer nach einem der Ansprüche 1 bis 3, **dadurch gekennzeichnet, dass** wenigstens eine Materiallage durch eine Fasermatte (20a-20g; 20aa-20dd) gebildet ist, die sich entlang der Umfangsrichtung (U) über wenigstens einen radial äußersten Abschnitt des ersten Leitelements (210) und/oder über wenigstens einen radial innersten Abschnitt des zweiten Leitelements (220) erstreckt.

5. Mischer nach Anspruch 4, **dadurch gekennzeichnet, dass** sich die Fasermatte (20a-20g; 20aa-20dd) entlang der Umfangsrichtung (U) über genau einen radial äußersten Abschnitt des ersten Leitelements (210) oder über genau einen radial innersten Abschnitt des zweiten Leitelements (220) erstreckt, wobei sich die Fasermatte (20a-20g; 20aa-20dd) insbesondere in dem Bereich des Mischers (20), in dem die Fasermatte (20a-20g; 20aa-20dd) vorgesehen ist, über die gesamte Länge des Mischers (20) in einer parallel zur Mittelachse (M) verlaufenden Längsrichtung (L) erstreckt.

6. Verfahren zur Herstellung eines Mischers (20) aus einem Verbundwerkstoff mittels mindestens zweier, jeweils Fasern aufweisender Materiallagen (a1-a5, b1-b4, c1-c4, d1-d5; 20a-20g; 20aa-20dd), wobei der Mischer (20) für ein Triebwerk (T) und zur Mischung von Fluidströmen (f1, f2) aus einem Primärstromkanal und einem Sekundärstromkanal des Triebwerks (T) vorgesehen ist und der Mischer (20) hierfür jeweils mehrere entlang einer Umfangsrichtung (U) sich abwechselnde und sich entlang einer Mittelachse (M) erstreckende, erste und zweite Leitelemente (210, 220) aufweist, wobei die ersten Leitelemente (210) mit wenigstens einem radial auswärts verlaufenden Abschnitt diffusorartig und die zweiten Leitelemente (220) mit wenigstens einem radial einwärts verlaufenden Abschnitt düsenartig ausgebildet sind,
**dadurch gekennzeichnet, dass**
die mindestens zwei Materiallagen (a1-a5, b1-b4, c1-c4, d1-d5; 20a-20g; 20aa-20dd) zur Bildung der ersten und zweiten Leitelemente (210, 220) des Mischers (20) mit ihren Rändern entlang der Mittelachse (M) zur wenigstens lokalen Versteifung der Struktur des Mischers (20) einander überlappend angeordnet werden, wobei
- zwei benachbarte erste und zweite Leitelemente (210, 220) eine gemeinsame Seitenwand (231-234) aufweisen, die zwischen einem radial äußersten Abschnitt des ersten Leitelementes (210) und einem radial innersten Abschnitt des zweiten Leitelements (220) verläuft, und die mindestens zwei Materiallagen (20aa-20dd) an dieser Seitenwand (231-234) entlang der Mittelachse (M) einander überlappend angeordnet werden, sodass durch die sich überlappenden Materiallagen (20aa-20dd) an der an sich flachen Seitenwand (231-234) in etwa mittig eine lokale, sich in axialer Richtung erstreckende Verdickung (V1-V4) entsteht, die die Struktur des Mischers (20) lokal versteift,
- sich längs der Mittelachse (M) erstreckende Randkanten (201bb, 202bb) der sich überlappenden Materiallagen (20aa-20dd) jeweils einen Verlauf aufweisen, der, bezogen auf die Mittelachse (M), zusätzlich zur einer axialen Richtungskomponente sowohl eine Richtungskomponente in Umfangsrichtung (U) als auch eine Richtungskomponente in radialer Richtung (r) umfasst, und
- die Randkanten (201bb, 202bb) bezüglich wenigstens zweier zueinander senkrechter Raumachsen gekrümmt verlaufen.

7. Verfahren nach Anspruch 6, **dadurch gekennzeichnet, dass** die mindestens zwei Materiallagen (a1-a5, b1-b4, c1-c4, d1-d5; 20a-20g; 20aa-20dd) flexibel sind und an einem Herstellungswerkzeug (3, 3inv) angeordnet werden, das eine Kontur des Mischers (20) vorgibt, und die Materiallagen (a1-a5, b1-b4, c1-c4, d1-d5; 20a-20g; 20aa-20dd) an diesem Herstellungswerkzeug (3, 3inv) einer Härtung unterworfen werden.

8. Verfahren nach Anspruch 7, **dadurch gekennzeichnet, dass** Teil der Härtung ein Infusionsverfahren, ein Autoklavenverfahren oder ein Injektionsverfahren ist.

9. Verfahren nach Anspruch 7 oder 8, **dadurch gekennzeichnet, dass** sich das Herstellungswerkzeug (3) entlang einer mit der Mittelachse (M) des Mischers (20) zusammenfallenden Längsachse erstreckt und radial nach außen vorstehende Radialarme (30a-30-d, 30a*) für die Definition der ersten und zweiten Leitelemente (210, 220) des Mischers (20) aufweist, und die mindestens zwei Materiallagen (a1-a5, b1-b4, c1-c4, d1-d5; 20a-20g; 20aa-20dd) an einer Außenkontur des Herstellungswerkzeugs (3) angeordnet werden, oder dass sich das Herstellungswerkzeug (3inv) entlang einer mit der Mittelachse (M) des Mischers (20) zusammenfallenden Längsachse erstreckt und einen Hohlraum kreisringförmig umrandet, in den sich radial nach innen erstreckende Radialarme (30inv) des Herstellungswerkzeugs (3inv) für die Definition der ersten und zweiten Leitelemente (210, 220) des Mischers (20) vorstehen, und die mindestens zwei Materiallagen (a1-a5, b1-b4, c1-c4, d1-d5; 20a-20g; 20aa-20dd) an einer Innenkontur des Herstellungswerkzeugs (3inv) angeordnet werden.

10. Verfahren nach einem der Ansprüche 6 bis 9, **dadurch gekennzeichnet, dass** die mindestens zwei Materiallagen (20aa-20dd) aus einer Materialfläche ausgeschnitten werden, wobei
- die mindestens zwei Materiallagen (20aa-20dd) zur Bildung wenigstens oder lediglich eines Segments (21.1) des Mischers (20) vorgesehen sind,
- die Geometrien der mindestens zwei Materiallagen (20aa-20dd) automatisiert unter Vorgabe wenigstens eines Designparameters bestimmt werden, und
- die mindestens zwei Materiallagen (20aa-20dd) mit den automatisiert bestimmten Geometrien aus der Materialfläche derart geschnitten werden, dass ein Minimum an Verschnitt entsteht, wobei eine hierfür erforderliche Vorgabe einer Anordnung von Schnittlinien (CA) für die mindestens zwei Materiallagen (20aa-20dd) an der Materialfläche ebenfalls automatisiert erfolgt.

11. Triebwerk mit einem Mischer (20) nach einem der Ansprüche 1 bis 5.

## Claims

1. Mixer for an engine (T), which mixer
- has, for the mixing of fluid flows (f1, f2) from a primary flow channel and from a secondary flow channel of the engine (T), in each case multiple first and second guide elements (210, 220) which alternate along a circumferential direction (U) and which extend along a central axis (M), wherein the first guide elements (210) are, with at least one radially outwardly running section, of diffuser-like form and the second guide elements (220) are, with at least one radially inwardly running section, of nozzle-like form, and
- the mixer (20) is composed of a composite material with at least two separate material layers (a1-a5, b1-b4, c1-c4, d1-d5; 20a-20g; 20aa-20dd),
**characterized in that**
the at least two material layers (a1-a5, b1-b4, c1-c4, d1-d5; 20a-20g; 20aa-20dd) are arranged with their margins overlapping one another along the central axis (M) for the purposes of at least locally stiffening the structure of the mixer (20), specifically in a region (OL13, OL24, OL35, OL46, OL57, OL68; S1-S8) of the mixer (20) in which the first and second guide elements (210, 220) are provided, wherein
- two adjacent first and second guide elements (210, 220) have a common side wall (231-234) which runs between a radially outermost section of the first guide element (210) and a radially innermost section of the second guide element (220), and the at least two material layers (20aa-20dd) are, at this side wall (231-234), arranged so as to overlap one another along the central axis (M) such that a local thickening (V1-V4) which extends in an axial direction and which locally stiffens the structure of the mixer (20) is formed approximately centrally on the inherently flat side wall (231-234) owing to the overlapping material layers (20aa-20dd),
- marginal edges (201bb, 202bb), extending along the central axis (M), of the overlapping material layers (20aa-20dd) each have a course which, in relation to the central axis (M), comprises not only the one axial directional component but also both a directional component in a circumferential direction (U) and a directional component in a radial direction (r), and
- the marginal edges (201bb, 202bb) run in a curved manner with respect to at least two mutually perpendicular spatial axes.

2. Mixer according to Claim 1, **characterized in that** the first guide elements (210) are convexly curved and/or the second guide elements (220) are concavely curved and the at least two material layers (a1-a5, b1-b4, c1-c4, d1-d5; 20a-20g; 20aa-20dd) overlap one another along the central axis (M) in the region of the convex and/or concave curvature.

3. Mixer according to Claim 1 or 2, **characterized in that**, in addition to the at least two material layers (a1-a5, b1-b4, c1-c4, d1-d5) which are arranged so as to overlap one another, at least one further material layer (b1-b4, c1-c4, d1-d5, a1-a5) is provided which extends in the circumferential direction over the region (OL13, OL24, OL35, OL46, OL57, OL68; S1-S8) in which margins of the at least two material layers (a1-a5, b1-b4, c1-c4, d1-d5) lie one on top of the other or adjoin one another.

4. Mixer according to any of Claims 1 to 3, **characterized in that** at least one material layer is formed by a fibre mat (20a-20g; 20aa-20dd) which extends along the circumferential direction (U) over at least one radially outermost section of the first guide element (210) and/or over at least one radially innermost section of the second guide element (220).

5. Mixer according to Claim 4, **characterized in that** the fibre mat (20a-20g; 20aa-20dd) extends along the circumferential direction (U) over exactly one radially outermost section of the first guide element (210) or over exactly one radially innermost section of the second guide element (220), wherein, in particular **in that** region of the mixer (20) in which the fibre mat (20a-20g; 20aa-20dd) is provided, the fibre mat (20a-20g; 20aa-20dd) extends over the entire length of the mixer (20) in a longitudinal direction (L) running parallel to the central axis (M).

6. Method for producing a mixer (20) composed of a composite material by means of at least two material layers (a1-a5, b1-b4, c1-c4, d1-d5; 20a-20g; 20aa-20dd) which each have fibres, wherein the mixer (20) is provided for an engine (T) and for mixing fluid flows (f1, f2) from a primary flow channel and from a secondary flow channel of the engine (T), and the mixer (20) has, for this purpose, in each case multiple first and second guide elements (210, 220) which alternate along a circumferential direction (U) and extend along a central axis (M), wherein the first guide elements (210) are, with at least one radially outwardly running section, of diffuser-like form and the second guide elements (220) are, with at least one radially inwardly running section, of nozzle-like form,
**characterized in that**
the at least two material layers (a1-a5, b1-b4, c1-c4, d1-d5; 20a-20g; 20aa-20dd) are, in order to form the first and second guide elements (210, 220) of the mixer (20), arranged with their margins overlapping one another along the central axis (M) for the purposes of at least locally stiffening the structure of the mixer (20), wherein
- two adjacent first and second guide elements (210, 220) have a common side wall (231-234) which runs between a radially outermost section of the first guide element (210) and a radially innermost section of the second guide element (220), and the at least two material layers (20aa-20dd) are, at this side wall (231-234), arranged so as to overlap one another along the central axis (M) such that a local thickening (V1-V4) which extends in an axial direction and which locally stiffens the structure of the mixer (20) is formed approximately centrally on the inherently flat side wall (231-234) owing to the overlapping material layers (20aa-20dd),
- marginal edges (201bb, 202bb), extending along the central axis (M), of the overlapping material layers (20aa-20dd) each have a course which, in relation to the central axis (M), comprises not only the one axial directional component but also both a directional component in a circumferential direction (U) and a directional component in a radial direction (r), and
- the marginal edges (201bb, 202bb) run in a curved manner with respect to at least two mutually perpendicular spatial axes.

7. Method according to Claim 6, **characterized in that** the at least two material layers (a1-a5, b1-b4, c1-c4, d1-d5; 20a-20g; 20aa-20dd) are flexible and are arranged on a production tool (3, 3inv) which predefines a contour of the mixer (20), and the material layers (a1-a5, b1-b4, c1-c4, d1-d5; 20a-20g; 20aa-20dd) are subjected to a hardening process on said production tool (3, 3inv).

8. Method according to Claim 7, **characterized in that** a part of the hardening process is an infusion process, an autoclave process or an injection process.

9. Method according to Claim 7 or 8, **characterized in that** the production tool (3) extends along a longitudinal axis which coincides with the central axis (M) of the mixer (20), and said production tool has radially outwardly projecting radial arms (30a-30d, 30a*) for the purposes of defining the first and second guide elements (210, 220) of the mixer (20), and the at least two material layers (a1-a5, b1-b4, c1-c4, d1-d5; 20a-20g; 20aa-20dd) are arranged on an outer contour of the production tool (3), or **in that** the production tool (3inv) extends along a longitudinal axis which coincides with the central axis (M) of the mixer (20) and, in circular-ring-shaped fashion, borders a cavity into which radially inwardly extending radial arms (30inv) of the production tool (3inv) project for the purposes of defining the first and second guide elements (210, 220) of the mixer (20), and the at least two material layers (a1-a5, b1-b4, c1-c4, d1-d5; 20a-20g; 20aa-20dd) are arranged on an inner contour of the production tool (3inv).

10. Method according to any of Claims 6 to 9, **characterized in that** the at least two material layers (20aa-20dd) are cut out of a material area, wherein
- the at least two material layers (20aa-20dd) are provided for forming at least one or only one segment (21.1) of the mixer (20),
- the geometries of the at least two material layers (20aa-20dd) are determined in automated fashion, with at least one design parameter being specified, and
- the at least two material layers (20aa-20dd) with the geometries determined in automated fashion are cut out of the material area such that a minimum amount of waste is generated, wherein a specification, required for this purpose, of an arrangement of cut lines (CA) for the at least two material layers (20aa-20dd) on the material area is likewise performed in automated fashion.

11. Engine having a mixer (20) according to any of Claims 1 to 5.

## Revendications

1. Mélangeur pour un motopropulseur (T) qui
- pour le mélange de flux de fluide (f1, f2) provenant d'un canal de flux primaire et d'un canal de flux secondaire du motopropulseur (T), présente respectivement plusieurs premiers et deuxièmes éléments de guidage (210, 220) alternant le long d'une direction circonférentielle (U) et s'étendant le long d'un axe médian (M), les premiers éléments de guidage (210) étant pourvus d'au moins une partie s'étendant radialement vers l'extérieur et étant réalisés à la manière d'un diffuseur, et les deuxièmes éléments de guidage (220) étant pourvus d'au moins une partie s'étendant radialement vers l'intérieur étant réalisés à la manière d'une buse, et
- le mélangeur (20) étant composé d'un matériau composite comprenant au moins deux couches de matériau séparées (a1-a5, b1-b4, c1-c4, d1-d5 ; 20a-20g ; 20aa-20dd),
**caractérisé en ce que** les au moins deux couches de matériau (a1-a5, b1-b4, c1-c4, d1-d5 ; 20a-20g ; 20aa-20dd) sont disposées en se chevauchant par leurs bords le long de l'axe médian (M) pour le renforcement au moins local de la structure du mélangeur (20), notamment dans une zone (OL13, OL24, OL35, OL46, OL57, OL68 ; S1-S8) du mélangeur (20) dans laquelle les premiers et deuxièmes éléments de guidage (210, 220) sont prévus, dans lequel
- deux premier et deuxième éléments de guidage (210, 220) adjacents présentent une paroi latérale (231-234) commune qui s'étend entre une partie radialement la plus à l'extérieur du premier élément de guidage (210) et une partie radialement la plus à l'intérieur du deuxième élément de guidage (220), et les au moins deux couches de matériau (20aa-20dd) sont disposées sur cette paroi latérale (231-234) le long de l'axe médian (M) en se chevauchant de sorte que les couches de matériau (20aa-20dd) se chevauchant forment sur la paroi latérale (231-234), plate en soi, environ au milieu, une surépaisseur (V1-V4) locale, s'étendant dans la direction axiale qui renforce localement la structure du mélangeur (20),
- des bords marginaux (201bb, 202bb) s'étendant le long de l'axe médian (M) des couches de matériau (20aa-20dd) se chevauchant présentent respectivement une allure qui comprend par rapport à l'axe médian (M), en plus d'une composante directionnelle axiale, à la fois une composante directionnelle dans la direction circonférentielle (U) et une composante directionnelle dans la direction radiale (r), et
- les bords marginaux (201bb, 202bb) s'étendent de manière courbe par rapport à au moins deux axes dans l'espace perpendiculaires l'un à l'autre.

2. Mélangeur selon la revendication 1, **caractérisé en ce que** les premiers éléments de guidage (210) sont bombés de manière convexe, et/ou les deuxièmes éléments de guidage (220) sont bombés de manière concave, et les au moins deux couches de matériau (a1-a5, b1-b4, c1-c4, d1-d5 ; 20a-20g ; 20aa-20dd) se chevauchent au niveau du bombement convexe et/ou concave le long de l'axe médian (M).

3. Mélangeur selon la revendication 1 ou 2, **caractérisé en ce qu'**en plus des au moins deux couches de matériau (a1-a5, b1-b4, c1-c4, d1-d5), qui sont disposées en se chevauchant, au moins une autre couche de matériau (b1-b4, c1-c4, d1-d5, a1-a5) est prévue qui s'étend dans la direction circonférentielle (U) au-delà de la zone (OL13, OL24, OL35, OL46, OL57, OL68 ; S1-S8) dans laquelle les marges des au moins deux couches de matériau (a1-a5, b1-b4, c1-c4, d1-d5) sont superposées ou adjacentes les unes aux autres.

4. Mélangeur selon l'une quelconque des revendications 1 à 3, **caractérisé en ce qu'**au moins une couche de matériau est formée par un mat de fibres (20a-20g ; 20aa-20dd) qui s'étend le long de la direction circonférentielle (U) sur au moins une partie radialement la plus à l'extérieur du premier élément de guidage (210) et/ou sur au moins une partie radialement la plus à l'intérieur du deuxième élément de guidage (220) .

5. Mélangeur selon la revendication 4, **caractérisé en ce que** le mat de fibres (20a-20g ; 20aa-20dd) s'étend le long de la direction circonférentielle (U) sur exactement une partie radialement la plus à l'extérieur du premier élément de guidage (210) ou sur au moins une partie radialement la plus à l'intérieur du deuxième élément de guidage (220), le mat de fibres (20a, 20g ; 20aa-20dd) s'étendant, en particulier dans la zone du mélangeur (20) dans laquelle le mat de fibres (20a-20g ; 20aa-20dd) est prévu, sur toute la longueur du mélangeur (20) dans une direction longitudinale (L) s'étendant en parallèle à l'axe médian (M).

6. Procédé de fabrication d'un mélangeur (20) à partir d'un matériau composite au moyen d'au moins deux couches de matériau (a1-a5, b1-b4, c1-c4, d1-d5 ; 20a-20g ; 20aa-20dd) chacune présentant des fibres, le mélangeur (20) étant prévu pour un motopropulseur (T) et pour le mélange de flux de fluide (f1, f2) provenant d'un canal de flux primaire et d'un canal de flux secondaire du motopropulseur (T), et le mélangeur (20) présentant à cet effet respectivement plusieurs premiers et deuxièmes éléments de guidage (210, 220) alternant le long d'une direction circonférentielle (U) et s'étendant le long d'un axe médian (M), les premiers éléments de guidage (210) étant pourvus d'au moins une partie s'étendant radialement vers l'extérieur et étant réalisés à la manière d'un diffuseur, et les deuxièmes éléments de guidage (220) étant pourvus d'au moins une partie s'étendant radialement vers l'intérieur et étant réalisés à la manière d'une buse,
**caractérisé en ce que** les au moins deux couches de matériau (a1-a5, b1-b4, c1-c4, d1-d5 ; 20a-20g ; 20aa-20dd), pour former les premier et deuxième éléments de guidage (210, 220) du mélangeur (20) sont disposées en se chevauchant par leurs bords le long de l'axe médian (M) pour le renforcement au moins local de la structure du mélangeur (20), dans lequel
- deux premier et deuxième éléments de guidage (210, 220) adjacents présentent une paroi latérale (231-234) commune qui s'étend entre une partie radialement la plus à l'extérieur du premier élément de guidage (210) et une partie radialement la plus à l'intérieur du deuxième élément de guidage (220), et les au moins deux couches de matériau (20aa-20dd) sont disposées sur cette paroi latérale (231-234) le long de l'axe médian (M) en se chevauchant de sorte que les couches de matériau (20aa-20dd) se chevauchant forment sur la paroi latérale (231-234), plate en soi, environ au milieu, une surépaisseur (V1-V4) locale, s'étendant dans la direction axiale qui renforce localement la structure du mélangeur (20),
- des bords marginaux (201bb, 202bb) s'étendant le long de l'axe médian (M) des couches de matériau (20aa-20dd) se chevauchant présentent respectivement une allure qui comprend par rapport à l'axe médian (M), en plus d'une composante directionnelle axiale, à la fois une composante directionnelle dans la direction circonférentielle (U) et une composante directionnelle dans la direction radiale (r), et
- les bords marginaux (201bb, 202bb) s'étendent de manière courbe par rapport à au moins deux axes dans l'espace perpendiculaires l'un à l'autre.

7. Procédé selon la revendication 6, **caractérisé en ce que** les au moins deux couches de matériau (a1-a5, b1-b4, c1-c4, dl-d5 ; 20a-20g ; 20aa-20dd) sont flexibles et disposées sur un outil de fabrication (3, 3inv) qui spécifie un contour du mélangeur (20), et les couches de matériau (a1-a5, b1-b4, c1-c4, d1-d5 ; 20a-20g ; 20aa-20dd) sont soumises à un durcissement sur cet outil de fabrication (3, 3inv).

8. Procédé selon la revendication 7, **caractérisé en ce qu'**une partie du durcissement est un procédé par infusion, un procédé d'autoclavage ou un procédé par injection.

9. Procédé selon la revendication 7 ou 8, **caractérisé en ce que** l'outil de fabrication (3) s'étend le long d'un axe longitudinal coïncidant avec l'axe médian (M) du mélangeur (20) et présente des bras radiaux (30a-30d, 30a*) faisant saillie vers l'extérieur pour la définition des premier et deuxième éléments de guidage (210, 220) du mélangeur (20), et les au moins deux couches de matériau (a1-a5, b1-b4, c1-c4, d1-d5 ; 20a-20g ; 20aa-20dd) sont disposées sur un contour extérieur de l'outil de fabrication (3), ou **en ce que** l'outil de fabrication (3inv) s'étend le long d'un axe longitudinal coïncidant avec l'axe médian (M) du mélangeur (20) et entoure une cavité en forme d'anneau de cercle, dans laquelle des bras radiaux (30inv) s'étendant radialement vers l'intérieur de l'outil de fabrication (3inv) font saillie pour la définition des premier et deuxième éléments de guidage (210, 220) du mélangeur (20), et les au moins deux couches de matériau (a1-a5, b1-b4, c1-c4, d1-d5 ; 20a-20g ; 20aa-20dd) sont disposées sur un contour intérieur de l'outil de fabrication (3inv).

10. Procédé selon l'une quelconque des revendications 6 à 9, **caractérisé en ce que** les au moins deux couches de matériau (20aa-20dd) sont découpées dans une surface de matériau, dans lequel
- les au moins deux couches de matériau (20aa-20dd) sont prévues pour former au moins ou uniquement un segment (21.1) du mélangeur (20),
- les géométries des au moins deux couches de matériau (20aa-20dd) sont déterminées de manière automatisée en spécifiant au moins un paramètre de conception, et
- les au moins deux couches de matériau (20aa-20dd) ayant les géométries déterminées de manière automatisée sont découpées dans la surface de matériau de façon à provoquer un minimum de rognures, une spécification nécessaire à cet effet pour une disposition de lignes de coupe (CA) pour les au moins deux couches de matériau (20aa-20dd) sur la surface de matériau étant également effectuée de manière automatisée.

11. Motopropulseur, comprenant un mélangeur (20) selon l'une quelconque des revendications 1 à 5.
